# EUROPEAN PATENT SPECIFICATION

(11) **EP 4 136 973 B1**
(45) Date of publication and mention of the grant of the patent: **17.12.2025**
(21) Application number: 22183305.6
(22) Date of filing: 04.10.2013
(51) Int. Cl.: A01N 25/22, A01N 37/16, A01N 59/00, C02F 1/72, C11D 3/39, C02F 103/00, A01P 1/00

(54) **USE OF PERCARBOXYLIC ACID COMPOSITIONS**
VERWENDUNGEN STABILER PERCARBONSÄUREZUSAMMENSETZUNGEN
UTILISATION DE COMPOSITIONS D'ACIDES PERCARBOXYLIQUES STABLES

(30) Priority: 05.10.2012 US 201261710631 P; 08.02.2013 US 201361762777 P; 15.03.2013 US 201313844515
(43) Date of publication of application: 22.02.2023
(62) Divisional of application: 19160311.7
(73) Proprietor: Ecolab USA Inc., St. Paul, MN 55102 (US)
(72) Inventor: LI, Junzhong, St. Paul, 55102 (US); Mcsherry, David, St. Paul, 55102 (US); BREWSTER, Alison, St. Paul, 55102 (US); STAUB, Richard, St. Paul, 55102 (US); De Paula, Renato, St. Paul, 55102 (US); Bolduc, John Wilhelm, St. Paul, 55102 (US); Ryther, Robert J., St. Paul, 55102 (US); Keasler, Victor V., St. Paul, 55102 (US)
(74) Representative: Godemeyer Blum Lenze Patentanwälte Partnerschaft mbB - werkpatent

(56) References cited:
- EP-A1- 0 626 371
- WO-A1-91/07375
- WO-A1-91/13058

## Description

### TECHNICAL FIELD

The present invention relates generally to a method for water treatments, including water treatments in connection with oil- and gas-field operations using stable percarboxylic acid compositions comprising, inter alia, at least two stabilizing agents.

### BACKGROUND OF THE INVENTION

Peroxycarboxylic acids are increasingly used as biocides in various fields owing to their broad biocidal efficacy and excellent environmental profiles. The most commonly used peroxycarboxylic acid is peracetic acid. Peracetic acid is a colorless, freely water soluble liquid which has great biocidal efficacy toward various microorganisms, such as bacteria, virus, yeast, fungi and spores. When decomposed, peracetic acid results in acetic acid (vinegar), water and oxygen. Pure peroxycarboxylic acids, such as peracetic acid, however, are unstable and explosive, and thus commercially available peroxycarboxylic acids are usually sold in an equilibrium solution. In addition to the peroxycarboxylic acid, an equilibrium solution also contains the corresponding carboxylic acid, hydrogen peroxide and water. Compared to the peroxycarboxylic acid, hydrogen peroxide only has negligible biocidal efficacy, but may pose environmental issues in some applications if it exceeds the specific release limitation. Furthermore, it has been disclosed that the presence of hydrogen peroxide has negative impacts on the efficacy of peroxycarboxylic acid toward some microorganisms.

In applications such as water treatment for use in fracturing drilling of oil and gas wells, the hydrogen peroxide that is in the peroxycarboxylic acid compositions may interact with other components used in the applications, such as gelling agents, friction reducers, corrosion inhibitors and scale inhibitors, etc. The presence of hydrogen peroxide in these solutions may cause the performance failure. Thus, there is a need to develop a peroxycarboxylic acid composition which has as high as possible peroxycarboxylic acid to hydrogen peroxide ratio for applications as a biocide in general, and in particular for water treatment in oil and gas drilling.

Commercially available peroxycarboxylic acid compositions generally have significantly less, or roughly equal, weight amounts of peroxycarboxylic acid than hydrogen peroxide. It is known that among other factors, the ratio of hydrogen peroxide to peroxycarboxylic acid plays a significant role in the stability of the peroxycarboxylic acid compositions. The higher the ratio of hydrogen peroxide to peroxycarboxylic acid, the more stable of the composition. Some commonly available peroxycarboxylic acid compositions have a ratio of 1.5 to 1 hydrogen peroxide to peroxycarboxylic acid. While compositions with higher ratio of peroxycarboxylic acid to hydrogen peroxide are commercially available, these compositions are in small packaging sizes limited by self accelerating decomposition temperature (SADT) transportation limitations and require controlled temperature storage due to the limited stability of the compositions.

Various stabilizers are used in peroxycarboxylic acid compositions to stabilize the compositions. For example, pyridine carboxylic acid based stabilizers, such as picolinic acid and salts, pyridine-2,6-dicarboxylic acid and salts, and phosphonate based stabilizers, such as phosphoric acid and salts, pyrophosphoric acid and salts and most commonly 1-hydroxyethylidene-1,1-diphosphonic acid (HEDP) and salts, are used. When used individually at the right level, these stabilizers can significantly improve the stability of the peroxycarboxylic acid compositions, and for the conventional peroxycarboxylic acid compositions, the stability profile achieved with these stabilizers allows for the commercial use of these compositions. For peroxycarboxylic acid compositions with high ratios of peroxycarboxylic acid to hydrogen peroxide, the extra stability challenge cannot be met by these stabilizers used in the traditional matter.

WO 91/13058 A1 discloses a reaction mixture comprising 2 L 86 % by weight H₂O₂, 2.6 l glacial acetic acid, 4 L demineralized water, 0.02 L of a 10 % solution of dipicolinic acid in aqueous NaOH and 0.0925 kg of a commercial phosphonate stabilizer product.

EP 0 626 371 A1 relates to stabilized percarboxylic acid solutions, in particular those with contain, in addition to percarboxylic acid, the carboxylic acid on which it is based, hydrogen peroxide and at least two stabilizers, and to a process for their preparation.

WO 91/07375 A1 discloses a composition containing from 0.1 to 45 % by weight peracetic acid, acetic acid, from 1 to 35 % by weight hydrogen peroxide, from 1 to 40 % by weight mineral acid, water, and from 0.1 to 5000 mg/l dipicolinic acid and from 0.1 to 20 % by weight of at least one phosphonic acid having capability of complex binding divalent metal cations.

### BRIEF SUMMARY OF THE INVENTION

The present invention relates to a method for slick water fracturing or high-viscosity fracturing according to claim 1. Optionally, the level of hydrogen peroxide is further reduced by adding a catalase or peroxidase either in use solution, or in the diluted concentrate prior to use. The compositions disclosed are particularly useful in treating the water for use in fracturing drilling of oil and gas well.

The present invention is directed to a method for slick water fracturing of high-viscosity fracturing, which method comprises directing a composition into a subterranean environment, wherein the composition comprises:
1) a C₁ - C₂₂ carboxylic acid;
2) a C₁ - C₂₂ percarboxylic acid;
3) hydrogen peroxide;
4) a first stabilizing agent, which is picolinic acid or a compound having the following Formula (IA): 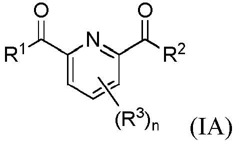 wherein
   R¹ is OH or -NR^{1a}R^{1b}, wherein R^{1a} and R^{1b} are independently hydrogen or (C₁ - C₆)alkyl;
   R² is OH or -NR^{2a}R^{2b}, wherein R^{2a} and R^{2b} are independently hydrogen or (C₁ - C₆)alkyl;
   each R³ is independently (C₁ - C₆)alkyl, (C₂ - C₆)alkenyl or (C₂ - C₆)alkynyl; and
   n is a number from zero to 3;
   or a salt thereof;
   or a compound having the following Formula (IB): 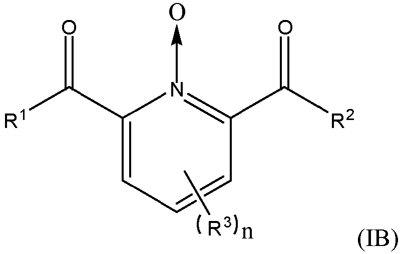
   wherein
   R¹ is OH or -NR^{1a}R^{1b}, wherein R^{1a} and R^{1b} are independently hydrogen or (C₁ - C₆)alkyl;
   R² is OH or -NR^{2a}R^{2b}, wherein R^{2a} and R^{2b} are independently hydrogen or (C₁ - C₆)alkyl;
   each R³ is independently (C₁ -C₆)alkyl, (C₂ - C₆)alkenyl or (C₂ - C₆)alkynyl; and
   n is a number from zero to 3;
   or a salt thereof;
5) a second stabilizing agent, which is a compound having the following Formula (IIA): 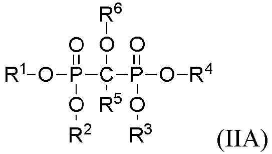 wherein
   R¹, R², R³, and R⁴ are independently hydrogen, (C₁ - C₆)alkyl, (C₂ -C₆)alkenyl or (C₂ - C₆)alkynyl, or C₆ - C₂₀ aryl;
   R⁵ is (C₁ - C₆)alkyl, (C₂ - C₆)alkenyl or (C₂ - C₆)alkynyl; and
   R⁶ is hydrogen, (C₁- C₆)alkyl, (C₂ - C₆)alkenyl or (C₂ - C₆)alkynyl;
   or a salt thereof;
   or a compound having the following Formula (IIB): 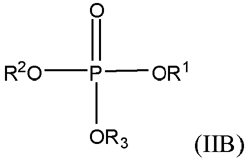
   wherein
   R¹, R², and R³ are independently hydrogen, (C₁- C₆)alkyl, (C₂ - C₆)alkenyl or
   (C₂ - C₆)alkynyl, or C₆ - C₂₀ aryl;
   or a salt thereof;
6) either a friction reducer or a viscosity enhancer; and
   wherein for slick water fracturing said hydrogen peroxide has a concentration of 1 ppm to 20 ppm, and said C₁-C₂₂ percarboxylic acid has a concentration of at least 2 times of the concentration of said hydrogen peroxide, or
   wherein for high-viscosity fracturing said hydrogen peroxide has a concentration of 1 ppm to 15 ppm, and said C₁-C₂₂ percarboxylic acid has a concentration of at least 2 times of the concentration of said hydrogen peroxide.

### BRIEF DESCRIPTION OF THE DRAWINGS

Figure 1 illustrates stability of peracetic acid compositions with various stabilizers.
Figure 2 illustrates synergistic stabilizing performance of HEDP and DPA.
Figure 3 illustrates SADT test of peracetic acid compositions with various stabilizers.
Figure 4 illustrates kinetic viscosity profile of POAA with various levels of H₂O₂ in a gel fluid.
Figure 5A and 5B illustrate an example of H₂S reduction using various levels of formulations 13523-37-1 and 13523-37-2.
Figure 6A and 6B illustrate another example of H₂S reduction using various levels of formulations 13523-37-1 and 13523-37-2.

### DETAILED DESCRIPTION OF THE INVENTION

For clarity of disclosure, and not by way of limitation, the detailed description of the invention is divided into the subsections that follow.

### A. Definitions

Unless defined otherwise, all technical and scientific terms used herein have the same meaning as is commonly understood by one of ordinary skill in the art to which this invention belongs.

So that the present invention may be more readily understood, certain terms are first defined. Unless defined otherwise, all technical and scientific terms used herein have the same meaning as commonly understood by one of ordinary skill in the art to which embodiments of the invention pertain. Many methods and materials similar, modified, or equivalent to those described herein can be used in the practice of the embodiments of the present invention without undue experimentation, the preferred materials and methods are described herein. In describing and claiming the embodiments of the present invention, the following terminology will be used in accordance with the definitions set out below.

The term "cleaning," as used herein, means to perform or aid in soil removal, bleaching, microbial population reduction, or combination thereof. For the purpose of this patent application, successful microbial reduction is achieved when the microbial populations are reduced by at least 50%, or by significantly more than is achieved by a wash with water. Larger reductions in microbial population provide greater levels of protection.

As used herein, the term "disinfectant" refers to an agent that kills all vegetative cells including most recognized pathogenic microorganisms, using the procedure described in A.O.A. C. Use Dilution Methods, Official Methods of Analysis of the Association of Official Analytical Chemists, paragraph 955.14 and applicable sections, 15th Edition, 1990 (EPA Guideline 91-2). As used herein, the term "high level disinfection" or "high level disinfectant" refers to a compound or composition that kills substantially all organisms, except high levels of bacterial spores, and is effected with a chemical germicide cleared for marketing as a sterilant by the Food and Drug Administration. As used herein, the term "intermediate-level disinfection" or "intermediate level disinfectant" refers to a compound or composition that kills mycobacteria, most viruses, and bacteria with a chemical germicide registered as a tuberculocide by the Environmental Protection Agency (EPA). As used herein, the term "low-level disinfection" or "low level disinfectant" refers to a compound or composition that kills some viruses and bacteria with a chemical germicide registered as a hospital disinfectant by the EPA.

As used herein, the term "free," "no," "substantially no" or "substantially free" refers to a composition, mixture, or ingredient that does not contain a particular compound or to which a particular compound or a particular compound-containing compound has not been added. In some embodiments, the reduction and/or elimination of hydrogen peroxide according to embodiments provide hydrogen peroxide-free or substantially-free compositions. Should the particular compound be present through contamination and/or use in a minimal amount of a composition, mixture, or ingredients, the amount of the compound shall be less than 3 wt-%. More preferably, the amount of the compound is less than 2 wt-%, less than 1 wt-%, and most preferably the amount of the compound is less than 0.5 wt-%.

As used herein, the term "microorganism" refers to any noncellular or unicellular (including colonial) organism. Microorganisms include all prokaryotes. Microorganisms include bacteria (including cyanobacteria), spores, lichens, fungi, protozoa, virinos, viroids, viruses, phages, and some algae. As used herein, the term "microbe" is synonymous with microorganism.

As used herein, the terms "mixed" or "mixture" when used relating to "percarboxylic acid composition," "percarboxylic acids," "peroxycarboxylic acid composition" or "peroxycarboxylic acids" refer to a composition or mixture including more than one percarboxylic acid or peroxycarboxylic acid.

As used herein, the term "sanitizer" refers to an agent that reduces the number of bacterial contaminants to safe levels as judged by public health requirements. In an embodiment, sanitizers for use in this invention will provide at least a 99.999% reduction (5-log order reduction). These reductions can be evaluated using a procedure set out in Germicidal and Detergent Sanitizing Action of Disinfectants, Official Methods of Analysis of the Association of Official Analytical Chemists, paragraph 960.09 and applicable sections, 15th Edition, 1990 (EPA Guideline 91-2). According to this reference a sanitizer should provide a 99.999% reduction (5-log order reduction) within 30 seconds at room temperature, 25±2°C, against several test organisms.

Differentiation of antimicrobial "-cidal" or "-static" activity, the definitions which describe the degree of efficacy, and the official laboratory protocols for measuring this efficacy are considerations for understanding the relevance of antimicrobial agents and compositions. Antimicrobial compositions can affect two kinds of microbial cell damage. The first is a lethal, irreversible action resulting in complete microbial cell destruction or incapacitation. The second type of cell damage is reversible, such that if the organism is rendered free of the agent, it can again multiply. The former is termed microbiocidal and the later, microbistatic. A sanitizer and a disinfectant are, by definition, agents which provide antimicrobial or microbiocidal activity. In contrast, a preservative is generally described as an inhibitor or microbistatic composition.

As used herein, the term "water" for treatment according to the invention includes a variety of sources, such as freshwater, pond water, sea water, salt water or brine source, brackish water, recycled water. Waters are also understood to optionally include both fresh and recycled water sources (*e.g.* "produced waters"), as well as any combination of waters for treatment according to the invention. In some embodiments, produced water (or reuse water) refers to a mixture of water that comprises both water recycled from previous or concurrent oil- and gas-field operations, *e.g.*, fracking, and water that has not been used in oil- and gas-field operations, *e.g*., fresh water, pond water, sea water, etc.

As used herein, "weight percent," "wt-%," "percent by weight," "% by weight," and variations thereof refer to the concentration of a substance as the weight of that substance divided by the total weight of the composition and multiplied by 100. It is understood that, as used here, "percent," "%," are intended to be synonymous with "weight percent," "wt-%," etc.

It is understood that aspects and embodiments of the invention described herein include "consisting" and/or "consisting essentially of" aspects and embodiments.

Throughout this disclosure, various aspects of this invention are presented in a range format. The description of a range should be considered to have specifically disclosed all individual numerical values within that range. For example, description of a range such as from 1 to 6 should be considered to have specifically disclosed individual numbers within that range, for example, 1, 2, 3, 4, 5, and 6. This applies regardless of the breadth of the range.

Other objects, advantages and features of the present invention will become apparent from the following specification taken in conjunction with the accompanying drawings.

### B. Stable percarboxylic acid compositions and uses thereof

The present invention relates to a method for slick water fracturing or high-viscosity fracturing, which method comprises directing a stable percarboxylic acid composition into a subterranean environment. In one aspect, the composition used in the method according to the present invention comprises:
1) a C₁ - C₂₂ carboxylic acid;
2) a C₁ - C₂₂ percarboxylic acid;
3) hydrogen peroxide;
4) a first stabilizing agent, which is picolinic acid or a compound having the following Formula (IA): 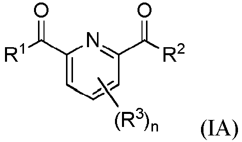 wherein
   R¹ is OH or-NR^{1a}R^{1b}, wherein R^{1a}and R^{1b} are independently hydrogen or (C₁ - C₆)alkyl;
   R² is OH or -NR^{2a}R^{2b}, wherein R^{2a}and R^{2b} are independently hydrogen or (C₁ - C₆)alkyl;
   each R³ is independently (C₁ - C₆)alkyl, (C₂ - C₆)alkenyl or (C₂ - C₆)alkynyl; and
   n is a number from zero to 3;
   or a salt thereof;
   or a compound having the following Formula (IB): 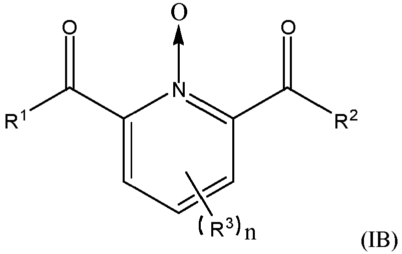
   wherein
   R¹ is OH or-NR^{1a}R^{1b}, wherein R^{1a} and R^{1b} are independently hydrogen or (C₁ - C₆)alkyl;
   R² is OH or -NR^{2a}R^{2b}, wherein R^{2a}and R^{2b} are independently hydrogen or (C₁ - C₆)alkyl;
   each R³ is independently (C₁ - C₆)alkyl, (C₂ - C₆)alkenyl or (C₂ - C₆)alkynyl; and
   n is a number from zero to 3;
   or a salt thereof;
5) a second stabilizing agent, which is a compound having the following Formula (IIA): 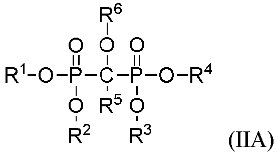 wherein
   R¹, R², R³, and R⁴ are independently hydrogen, (C₁ - C₆)alkyl, (C₂ - C₆)alkenyl or (C₂ - C₆)alkynyl, or C₆ - C₂₀ aryl;
   R⁵ is (C₁ - C₆)alkyl, (C₂ - C₆)alkenyl or (C₂ - C₆)alkynyl; and
   R⁶ is hydrogen, (C₁ - C₆)alkyl, (C₂ - C₆)alkenyl or (C₂ - C₆)alkynyl;
   or a salt thereof;
   or a compound having the following Formula (IIB): 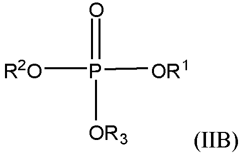
   wherein
   R¹, R², and R³ are independently hydrogen, (C₁ - C₆)alkyl, (C₂ - C₆)alkenyl or (C₂ - C₆)alkynyl, or C₆ - C₂₀ aryl;
   or a salt thereof;
6) either a friction reducer or a viscosity enhancer; and
   wherein for slick water fracturing said hydrogen peroxide has a concentration of 1 ppm to 20 ppm, and said C₁ - C₂₂ percarboxylic acid has a concentration of at least 2 times of the concentration of said hydrogen peroxide, or
   wherein for high-viscosity fracturing said hydrogen peroxide has a concentration of 1 ppm to 15 ppm, and said C₁-C₂₂ percarboxylic acid has a concentration of at least 2 times of the concentration of said hydrogen peroxide.

In some embodiments, the composition is an equilibrated composition that comprises peracid, hydrogen peroxide, carboxylic acid and a solvent, *e.g.*, water. In some embodiments, the composition does not comprise a mineral acid, *e.g.,* the mineral acids disclosed in WO 91/07375.

In some embodiments, the C₁-C₂₂ percarboxylic acid has a concentration of at least 6 times of the concentration of the hydrogen peroxide. In other embodiments, the C₁-C₂₂ percarboxylic acid has a concentration of at least 10 times of the concentration of the hydrogen peroxide. In still other embodiments, the C₁-C₂₂ percarboxylic acid has a concentration of at least 6, 7, 8, 9 or 10 times of the concentration of the hydrogen peroxide.

### Carboxylic Acid

The composition used in the method according to the present invention includes a carboxylic acid with the peracid composition and hydrogen peroxide. A carboxylic acid includes any compound of the formula R--(COOH)ₙ in which R can be hydrogen, alkyl, alkenyl, alkyne, acylic, alicyclic group, aryl, heteroaryl, or heterocylic group, and n is 1, 2, or 3. Preferably R includes hydrogen, alkyl, or alkenyl. The terms "alkyl," "alkenyl," "alkyne," "acylic," "alicyclic group," "aryl," "heteroaryl," and "heterocyclic group" are as defined below with respect to peracids.

Examples of suitable carboxylic acids according to the equilibrium systems of peracids according to the invention include a variety monocarboxylic acids, dicarboxylic acids, and tricarboxylic acids. Monocarboxylic acids include, for example, formic acid, acetic acid, propanoic acid, butanoic acid, pentanoic acid, hexanoic acid, heptanoic acid, octanoic acid, nonanoic acid, decanoic acid, undecanoic acid, dodecanoic acid, glycolic acid, lactic acid, salicylic acid, acetylsalicylic acid, mandelic acid, etc. Dicarboxylic acids include, for example, adipic acid, fumaric acid, glutaric acid, maleic acid, succinic acid, malic acid, tartaric acid, etc. Tricarboxylic acids include, for example, citric acid, trimellitic acid, isocitric acid, agaicic acid, etc.

In an aspect of the invention, a particularly well suited carboxylic acid is water soluble such as formic acid, acetic acid, propionic acid, butanoic acid, lactic acid, glycolic acid, citric acid, mandelic acid, glutaric acid, maleic acid, malic acid, adipic acid, succinic acid, tartaric acid, etc. Preferably the composition used according to the the invention includes acetic acid, octanoic acid, or propionic acid, lactic acid, heptanoic acid, octanoic acid, or nonanoic acid.

Additional examples of suitable carboxylic acids are employed in sulfoperoxycarboxylic acid or sulfonated peracid systems, which are disclosed in U.S. Patent Publication Nos. 2010/0021557, 2010/0048730 and 2012/0052134.

Any suitable C₁-C₂₂ carboxylic acid can be used in the compositions. In some embodiments, the C₁-C₂₂ carboxylic acid is a C₂-C₂₀ carboxylic acid. In other embodiments, the C₁-C₂₂ carboxylic acid is a C₁, C₂, C₃, C₄, C₅, C₆, C₇, C₈, C₉, C₁₀, C₁₁, C₁₂, C₁₃, C₁₄, C₁₅, C₁₆, C₁₇, C₁₈, C₁₉, C₂₀, C₂₁, or C₂₂ carboxylic acid. In still other embodiments, the C₁-C₂₂ carboxylic acid comprises acetic acid, octanoic acid and/or sulfonated oleic acid.

The C₁-C₂₂ carboxylic acid can be used at any suitable concentration. In some embodiments, the C₁-C₂₂ carboxylic acid has a concentration from 10 wt-% to 90 wt-%. In other embodiments, the C₁-C₂₂ carboxylic acid has a concentration from 20 wt-% to 80 wt-%. In still other embodiments, the C₁-C₂₂ carboxylic acid has a concentration at 10 wt-%, 20 wt-%, 30 wt-%, 40 wt-%, 50 wt-%, 60 wt-%, 70 wt-%, 80 wt-%, or 90 wt-%.

### Peracids

In some aspects, a peracid is included for antimicrobial efficacy in the compositions. As used herein, the term "peracid" may also be referred to as a "percarboxylic acid" or "peroxyacid." Sulfoperoxycarboxylic acids, sulfonated peracids and sulfonated peroxycarboxylic acids are also included within the term "peracid" as used herein. The terms "sulfoperoxycarboxylic acid," "sulfonated peracid," or "sulfonated peroxycarboxylic acid" refers to the peroxycarboxylic acid form of a sulfonated carboxylic acid as disclosed in U.S. Patent Publication Nos. 2010/0021557, 2010/0048730 and 2012/0052134. A peracid refers to an acid having the hydrogen of the hydroxyl group in carboxylic acid replaced by a hydroxy group. Oxidizing peracids may also be referred to herein as peroxycarboxylic acids.

A peracid includes any compound of the formula R--(COOOH)ₙ in which R can be hydrogen, alkyl, alkenyl, alkyne, acylic, alicyclic group, aryl, heteroaryl, or heterocyclic group, and n is 1, 2, or 3, and named by prefixing the parent acid with peroxy. Preferably R includes hydrogen, alkyl, or alkenyl. The terms "alkyl," "alkenyl," "alkyne," "acylic," "alicyclic group," "aryl," "heteroaryl," and "heterocyclic group" are as defined herein.

As used herein, the term "alkyl" includes a straight or branched saturated aliphatic hydrocarbon chain having from 1 to 22 carbon atoms, such as, for example, methyl, ethyl, propyl, isopropyl (1-methylethyl), butyl, tert-butyl (1,1-dimethylethyl). The term "alkyl" or "alkyl groups" also refers to saturated hydrocarbons having one or more carbon atoms, including straight-chain alkyl groups (*e.g.*, methyl, ethyl, propyl, butyl, pentyl, hexyl, heptyl, octyl, nonyl, decyl, etc.), cyclic alkyl groups (or "cycloalkyl" or "alicyclic" or "carbocyclic" groups) (*e.g*., cyclopropyl, cyclopentyl, cyclohexyl, cycloheptyl, cyclooctyl, etc.), branched-chain alkyl groups (*e.g.,* isopropyl, tert-butyl, sec-butyl, isobutyl, etc.), and alkyl-substituted alkyl groups (*e.g.,* alkyl-substituted cycloalkyl groups and cycloalkyl-substituted alkyl groups).

Unless otherwise specified, the term "alkyl" includes both "unsubstituted alkyls" and "substituted alkyls." As used herein, the term "substituted alkyls" refers to alkyl groups having substituents replacing one or more hydrogens on one or more carbons of the hydrocarbon backbone. Such substituents may include, for example, alkenyl, alkynyl, halogeno, hydroxyl, alkylcarbonyloxy, arylcarbonyloxy, alkoxycarbonyloxy, aryloxy, aryloxycarbonyloxy, carboxylate, alkylcarbonyl, arylcarbonyl, alkoxycarbonyl, aminocarbonyl, alkylaminocarbonyl, dialkylaminocarbonyl, alkylthiocarbonyl, alkoxyl, phosphate, phosphonato, phosphinato, cyano, amino (including alkyl amino, dialkylamino, arylamino, diarylamino, and alkylarylamino), acylamino (including alkylcarbonylamino, arylcarbonylamino, carbamoyl and ureido), imino, sulfhydryl, alkylthio, arylthio, thiocarboxylate, sulfates, alkylsulfinyl, sulfonates, sulfamoyl, sulfonamido, nitro, trifluoromethyl, cyano, azido, heterocyclic, alkylaryl, or aromatic (including heteroaromatic) groups.

The term "alkenyl" includes an unsaturated aliphatic hydrocarbon chain having from 2 to 12 carbon atoms, such as, for example, ethenyl, 1-propenyl, 2-propenyl, 1-butenyl, 2-methyl-1-propenyl. The alkyl or alkenyl can be terminally substituted with a heteroatom, such as, for example, a nitrogen, sulfur, or oxygen atom, forming an aminoalkyl, oxyalkyl, or thioalkyl, for example, aminomethyl, thioethyl, oxypropyl. Similarly, the above alkyl or alkenyl can be interrupted in the chain by a heteroatom forming an alkylaminoalkyl, alkylthioalkyl, or alkoxyalkyl, for example, methylaminoethyl, ethylthiopropyl, methoxymethyl.

Further, as used herein the term "alicyclic" includes any cyclic hydrocarbyl containing from 3 to 8 carbon atoms. Examples of suitable alicyclic groups include cyclopropanyl, cyclobutanyl, cyclopentanyl, etc. The term "heterocyclic" includes any closed ring structures analogous to carbocyclic groups in which one or more of the carbon atoms in the ring is an element other than carbon (heteroatom) , for example, a nitrogen, sulfur, or oxygen atom. Heterocyclic groups may be saturated or unsaturated. Examples of suitable heterocyclic groups include for example, aziridine, ethylene oxide (epoxides, oxiranes), thiirane (episulfides), dioxirane, azetidine, oxetane, thietane, dioxetane, dithietane, dithiete, azolidine, pyrrolidine, pyrroline, oxolane, dihydrofuran, and furan. Additional examples of suitable heterocyclic groups include groups derived from tetrahydrofurans, furans, thiophenes, pyrrolidines, piperidines, pyridines, pyrrols, picoline, coumaline, etc.

In some embodiments, alkyl, alkenyl, alicyclic groups, and heterocyclic groups can be unsubstituted or substituted by, for example, aryl, heteroaryl, C₁₋₄ alkyl, C₁₋₄ alkenyl, C₁₋₄ alkoxy, amino, carboxy, halo, nitro, cyano, --SO₃H, phosphono, or hydroxy. When alkyl, alkenyl, alicyclic group, or heterocyclic group is substituted, preferably the substitution is C₁₋₄ alkyl, halo, nitro, amido, hydroxy, carboxy, sulpho, or phosphono. In one embodiment, R includes alkyl substituted with hydroxy. The term "aryl" includes aromatic hydrocarbyl, including fused aromatic rings, such as, for example, phenyl and naphthyl. The term "heteroaryl" includes heterocyclic aromatic derivatives having at least one heteroatom such as, for example, nitrogen, oxygen, phosphorus, or sulfur, and includes, for example, furyl, pyrrolyl, thienyl, oxazolyl, pyridyl, imidazolyl, thiazolyl, isoxazolyl, pyrazolyl, isothiazolyl, etc. The term "heteroaryl" also includes fused rings in which at least one ring is aromatic, such as, for example, indolyl, purinyl, benzofuryl, etc.

In some embodiments, aryl and heteroaryl groups can be unsubstituted or substituted on the ring by, for example, aryl, heteroaryl, alkyl, alkenyl, alkoxy, amino, carboxy, halo, nitro, cyano, --SO₃H, phosphono, or hydroxy. When aryl, aralkyl, or heteroaryl is substituted, preferably the substitution is C₁₋₄ alkyl, halo, nitro, amido, hydroxy, carboxy, sulpho, or phosphono. In one embodiment, R includes aryl substituted with C₁₋₄ alkyl.

Peracids suitable for use include any peroxycarboxylic acids, including varying lengths of peroxycarboxylic and percarboxylic acids (*e.g.* C1-22) that can be prepared from the acid-catalyzed equilibrium reaction between a carboxylic acid described above and hydrogen peroxide. A peroxycarboxylic acid can also be prepared by the auto-oxidation of aldehydes or by the reaction of hydrogen peroxide with an acid chloride, acid hydride, carboxylic acid anhydride, or sodium alcoholate. Alternatively, peracids can be prepared through non-equilibrium reactions, which may be generated for use in situ, such as the methods disclosed in U.S. Pat. Application Ser. Nos. 13/331,304 and 13/331,486 each titled "In Situ Generation of Peroxycarboxylic Acids at Alkaline pH, and Methods of Use Thereof". Preferably a composition of the invention includes peroxyacetic acid, peroxyoctanoic acid, peroxypropionic acid, peroxylactic acid, peroxyheptanoic acid, peroxyoctanoic acid and/or peroxynonanoic acid.

In some embodiments, a peroxycarboxylic acid includes at least one watersoluble peroxycarboxylic acid in which R includes alkyl of 1-22 carbon atoms. For example, in one embodiment, a peroxycarboxylic acid includes peroxyacetic acid. In another embodiment, a peroxycarboxylic acid has R that is an alkyl of 1-22 carbon atoms substituted with hydroxy. Methods of preparing peroxyacetic acid are known to those of skill in the art including those disclosed in U.S. Pat. No. 2,833,813.

In another embodiment, a sulfoperoxycarboxylic acid has the following formula: 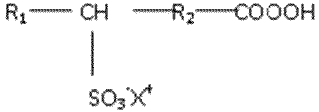 wherein R₁ is hydrogen, or a substituted or unsubstituted alkyl group; R² is a substituted or unsubstituted alkylene group; X is hydrogen, a cationic group, or an ester forming moiety; or salts or esters thereof. In additional embodiments, a sulfoperoxycarboxylic acid is combined with a single or mixed peroxycarboxylic acid composition, such as a sulfoperoxycarboxylic acid with peroxyacetic acid and peroxyoctanoic acid .(PSOA/POOA/POAA).

In other embodiments, a mixed peracid is employed, such as a peroxycarboxylic acid including at least one peroxycarboxylic acid of limited water solubility in which R includes alkyl of 5-22 carbon atoms and at least one watersoluble peroxycarboxylic acid in which R includes alkyl of 1-4 carbon atoms. For example, in one embodiment, a peroxycarboxylic acid includes peroxyacetic acid and at least one other peroxycarboxylic acid such as those named above. Preferably a composition of the invention includes peroxyacetic acid and peroxyoctanoic acid. Other combinations of mixed peracids are well suited for use in the current invention.

In another embodiment, a mixture of peracetic acid and peroctanoic acid is used to treat a water source, such as disclosed in U.S. Patent No. 5,314,687. In an aspect, the peracid mixture is a hydrophilic peracetic acid and a hydrophobic peroctanoic acid, providing antimicrobial synergy. In an aspect, the synergy of a mixed peracid system allows the use of lower dosages of the peracids.

In another embodiment, a tertiary peracid mixture composition, such as peroxysulfonated oleic acid, peracetic acid and peroctanoic acid are used to treat a water source, such as disclosed in U.S. Patent Publication No. 2010/00021557. A combination of the three peracids provides significant antimicrobial synergy providing an efficient antimicrobial composition for the water treatment methods according to the invention. In addition, it is thought the high acidity built in the composition assists in removing chemical contaminants from the water (*e.g.* sulfite and sulfide species).

Advantageously, a combination of peroxycarboxylic acids provides a composition with desirable antimicrobial activity in the presence of high organic soil loads. The mixed peroxycarboxylic acid compositions often provide synergistic micro efficacy. Accordingly, compositions of the invention can include a peroxycarboxylic acid, or mixtures thereof.

Various commercial formulations of peracids are available, including for example, peracetic acid (15%) available as EnviroSan (EcolabInc., St. Paul MN). Most commercial peracid solutions state a specific percarboxylic acid concentration without reference to the other chemical components in a use solution. However, it should be understood that commercial products, such as peracetic acid, will also contain the corresponding carboxylic acid (*e.g.* acetic acid), hydrogen peroxide and water.

Any suitable C₁-C₂₂ percarboxylic acid can be used in the compositions. In some embodiments, the C₁-C₂₂ percarboxylic acid is a C₂-C₂₀ percarboxylic acid. In other embodiments, the C₁-C₂₂ percarboxylic is a C₁, C₂, C₃, C₄, C₅, C₆, C₇, C₈, C₉, C₁₀, C₁₁, C₁₂, C₁₃, C₁₄, C₁₅, C₁₆, C₁₇, C₁₈, C₁₉, C₂₀, C₂₁, or C₂₂ carboxylic acid. In still other embodiments, the C₁-C₂₂ percarboxylic acid comprises peroxyacetic acid, peroxyoctanoic acid and/or peroxysulfonated oleic acid.

The C₁-C₂₂ percarboxylic acid can be used at any suitable concentration. In some embodiments, the C₁-C₂₂ percarboxylic acid has a concentration from 1 wt-% to 40 wt-%. In other embodiments, the C₁-C₂₂ percarboxylic acid has a concentration from 1 wt-% to 20 wt-%. In still other embodiments, the C₁-C₂₂ percarboxylic acid has a concentration at 1 wt-%, 2 wt-%, 3 wt-%, 4 wt-%, 5 wt-%, 6 wt-%, 7 wt-%, 8 wt-%, 9 wt-%, 10 wt-%, 11 wt-%, 12 wt-%, 13 wt-%, 14 wt-%, 15 wt-%, 16 wt-%, 17 wt-%, 18 wt-%, 19 wt-%, 20 wt-%, 25 wt-%, 30 wt-%, 35 wt-%, or 40 wt-%. For slick water fracturing the C₁-C₂₂ percarboxylic acid is used in a concentration of at least 2 times of the concentration of said hydrogen peroxide, or for high-viscosity fracturing the C₁-C₂₂ percarboxylic acid is used in a concentration of at least 2 times of the concentration of the hydrogen peroxide.

### Hydrogen Peroxide

The composition used in the method according to the present invention includes hydrogen peroxide. Hydrogen peroxide, H₂O₂, provides the advantages of having a high ratio of active oxygen because of its low molecular weight (34.014 g/mole) and being compatible with numerous substances that can be treated by methods of the invention because it is a weakly acidic, clear, and colorless liquid. Another advantage of hydrogen peroxide is that it decomposes into water and oxygen. It is advantageous to have these decomposition products because they are generally compatible with substances being treated. For example, the decomposition products are generally compatible with metallic substance (*e.g.*, substantially noncorrosive) and are generally innocuous to incidental contact and are environmentally friendly.

In one aspect of the invention, hydrogen peroxide is initially in an antimicrobial peracid composition in an amount effective for maintaining an equilibrium between a carboxylic acid, hydrogen peroxide, a solvent such as water, and a peracid. The amount of hydrogen peroxide should not exceed an amount that would adversely affect the antimicrobial activity of a composition of the invention. In further aspects of the invention, hydrogen peroxide concentration is significantly reduced within an antimicrobial peracid composition, preferably containing hydrogen peroxide at a concentration as close to zero as possible. That is, the concentration of hydrogen peroxide is minimized, through the use of a selected catalase or peroxidase enzymes according to the invention. In further aspects, the concentration of hydrogen peroxide is reduced and/or eliminated as a result of distilled equilibrium peracid compositions, other catalysts for hydrogen peroxide decomposition (*e.g.* biomimetic complexes) and/or the use of anionic perhydrolysis of esters (*e.g.* triacetin) to obtain peracids with very low hydrogen peroxide.

In some embodiments, an advantage of minimizing the concentration of hydrogen peroxide is that antimicrobial activity of a composition of the invention is improved as compared to conventional equilibrium peracid compositions. Without being limited to a particular theory of the invention, significant improvements in antimicrobial efficacy result from enhanced peracid stability from the reduced hydrogen peroxide concentration in use solution.

The hydrogen peroxide can be used at any suitable concentration. In some embodiments, the hydrogen peroxide has a concentration from 0.5 wt-% to 10 wt-%. In other embodiments, the hydrogen peroxide has a concentration from 1 wt-% to 2 wt-%. In still other embodiments, the hydrogen peroxide has a concentration at 0.5 wt-%, 1 wt-%, 2 wt-%, 3 wt-%, 4 wt-%, 5 wt-%, 6 wt-%, 7 wt-%, 8 wt-%, 9 wt-%, or 10 wt-%. In yet other embodiments, the hydrogen peroxide has a concentration at 1 wt-%, 1.1 wt-%, 1.2 wt-%, 1.3 wt-%, 1.4 wt-%, 1.5 wt-%, 1.6 wt-%, 1.7 wt-%, 1.8 wt-%, 1.9 wt-%, or 2 wt-%. For slick water fracturing the hydrogen peroxide has a concentration of 1 ppm to 20 ppm, and for high-viscosity fracturing the hydrogen peroxide has a concentration of 1 ppm to 15 ppm.

In some embodiments, the C₁-C₂₂ carboxylic acid is acetic acid and the C₁-C₂₂ percarboxylic acid is peracetic acid. In other embodiments, the C₁-C₂₂ carboxylic acid, *e.g.,* acetic acid, has a concentration of 70 wt-%, the C₁-C₂₂ percarboxylic acid, *e.g.*, peracetic acid, has a concentration of 15 wt-%, and the hydrogen peroxide has a concentration of at least 1 wt-%.

### Stabilizing agents

The composition used according to the present invention comprises a first stabilizing agent and a second stabilizing agent. The first stabilizing agent is either picolinc acid or a compound having the following Formula (IA): 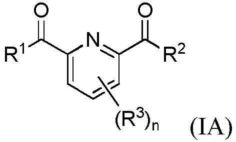 wherein
R¹ is OH or -NR^{1a}R^{1b}, wherein R^{1a} and R^{1b} are independently hydrogen or (C₁ - C₆)alkyl;
R² is OH or -NR^{2a}R^{2b}, wherein R^{2a} and R^{2b} are independently hydrogen or (C₁ - C₆)alkyl;
each R³ is independently (C₁ - C₆)alkyl, (C₂ - C₆)alkenyl or (C₂ - C₆)alkynyl; and n is a number from zero to 3;
or a salt thereof;
or a compound having the following Formula (IB): 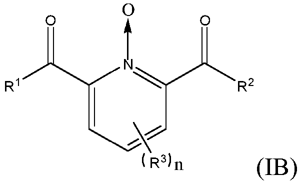
wherein
R¹ is OH or -NR^{1a}R^{1b}, wherein R^{1a} and R^{1b} are independently hydrogen or (C₁ - C₆)alkyl;
R² is OH or -NR^{2a}R^{2b}, wherein R^{2a} and R^{2b} are independently hydrogen or (C₁ - C₆)alkyl;
each R³ is independently (C₁ -C₆)alkyl, (C₂ - C₆)alkenyl or (C₂ - C₆)alkynyl; and n is a number from zero to 3;
or a salt thereof.

The second stabilizing agent is a compound having the following Formula (IIA): 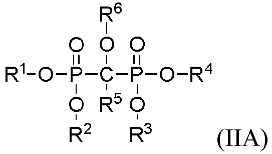 wherein
R¹, R², R³, and R⁴ are independently hydrogen, (C₁ - C₆)alkyl, (C₂ -C₆)alkenyl or (C₂ - C₆)alkynyl, or C₆ - C₂₀ aryl;
R⁵ is (C₁ - C₆)alkyl, (C₂ - C₆)alkenyl or (C₂ - C₆)alkynyl; and
R⁶ is hydrogen, (C₁- C₆)alkyl, (C₂ - C₆)alkenyl or (C₂ - C₆)alkynyl;
or a salt thereof;
or a compound having the following Formula (IIB): 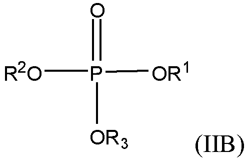
wherein
R¹, R², and R³ are independently hydrogen, (C₁ - C₆)alkyl, (C₂ - C₆)alkenyl or (C₂ - C₆)alkynyl, or C₆ - C₂₀ aryl;
or a salt thereof.

In some embodiments, at least one stabilizer is a phosphonic acid or a derivative thereof. Without wishing to be bound by any particular theory, it is thought that in addition to functioning as a stabilizer through the chelating of transition metal ions, phosphonic acid based stabilizers such as HEDP, also act as an acid catalyst and aid in the formation of the peroxycarboxylic acid from the corresponding carboxylic acid and hydrogen peroxide. In some embodiments, a pyridine carboxylic acid based stabilizer is used as a second stabilizer. Pyridine carboxylic acids such as 2,6-pyridinedicarboxylic acid (DPA), are well known chelators for metal ions. It is thought that by using two different types of stabilizers, the transition metals responsible for the catalytic decomposition of peroxycarboxylic acids are more efficiently deactivated by forming a more stable complex(es) involving both chelators.

In some embodiments, the first stabilizing agent is picolinic acid, or a salt thereof. In other embodiments, the first stabilizing agent is 2,6-pyridinedicarboxylic acid, or a salt thereof. The first stabilizing agent can be used at any suitable concentration. In some embodiments, the first stabilizing agent has a concentration from 0.005 wt-% to 5 wt-%. In other embodiments, the first stabilizing agent has a concentration from 0.05 wt-% to 0.15 wt-%. In still other embodiments, the first stabilizing agent has a concentration at 0.005 wt-%, 0.01 wt-%, 0.1 wt-%, 1 wt-%,2 wt-%, 3 wt-%, 4 wt-%, or 5 wt-%. In yet other embodiments, the first stabilizing agent has a concentration at 0.05 wt-%, 0.06 wt-%, 0.07 wt-%, 0.08 wt-%, 0.09 wt-%, 0.10 wt-%, 0.11 wt-%, 0.12 wt-%, 0.13 wt-%, 0.14 wt-%, or 0.15 wt-%.

In some embodiments, the second stabilizing agent is 1-hydroxy ethylidene-1,1-diphosphonic acid (HEDP), or a salt thereof. The second stabilizing agent can be used at any suitable concentration. In some embodiments, the second stabilizing agent has a concentration from 0.1 wt-% to 10 wt-%, *e.g.,* 0.1 wt-%, 0.5 wt-%, 1 wt-%, 2 wt-%, 3 wt-%, 4 wt-%, 5 wt-%, 6 wt-%, 7 wt-%, 8 wt-%, 9 wt-%, or 10 wt-%. In other embodiments, the second stabilizing agent has a concentration from 0.5 wt-% to 5 wt-%, *e.g.,* 0.5 wt-%, 1 wt-%, 1.5 wt-%, 2 wt-%, 2.5 wt-%, 3 wt-%, 3.5 wt-%, 4 wt-%, 4.5 wt-% or 5 wt-%. In still other embodiments, the second stabilizing agent has a concentration from 0.6 wt-% to 1.8 wt-%, *e.g.,* 0.6 wt-%, 0.7 wt-%, 0.8 wt-%, 0.9 wt-%, 1.0 wt-%, 1.1 wt-%, 1.2 wt-%, 1.3 wt-%, 1.4 wt-%, 1.5 wt-%, 1.6 wt-%, 1.7 wt-%, 1.8 wt-%.

In some embodiments, the composition used in the method according to the present invention can further comprise a substance that aids solubilization of the first and/or second stabilizing agent(s). Exemplary substances that can aid solubilization of the first and/or second stabilizing agent(s) include hydrotropes such as sodium xylene sulfonate, sodium cumene sulfonates, and surfactants, such as anionic surfactants and noinionic surfactants.

In some embodiments, the first stabilizing agent is a 2,6-pyridinedicarboxylic acid, or a salt thereof, and the second stabilizing agent is HEDP, or a salt thereof. In other embodiments, the first and second stabilizing agents act synergistically to delay or prevent the composition from meeting its self-accelerating decomposition temperature (SADT). SADT refers to the lowest temperature at which self-accelerating decomposition may occur with a composition. In some embodiments, SADT refers to the lowest temperature at which self-accelerating decomposition may occur under the commercial packaging, storage, transportation and/or use condition(s). SADT can be estimated, calculated, predicted and/or measured by any suitable methods. For example, SADT can be estimated, or measured directly by one of 3 methods (H1,H2 and H4) recommended by UN Committee for the Transportation of Dangerous Goods in "Recommendations on the Transport of Dangerous Goods, Model Regulations" (Rev.17) ST/SG/AC.10/1/Rev.17. For example, the methodology disclosed in Malow and Wehrstedt, J. Hazard Mater., 120(1-3):21-4 (2005) can be used.

The compositions used in the method according to the present invention can retain any suitable level or percentage of the C₁-C₂₂ percarboxylic acid activity under the usual packaging, storage, transportation and/or use condition(s). In some embodiments, the compositions retain at least 80% of the C₁-C₂₂ percarboxylic acid activity after storage of 30 days at 50 °C. Preferably, the present compositions retain at least 85%, 90% or higher percentage of the C₁-C₂₂ percarboxylic acid activity after storage of 30 days at 50 °C.

The composition used in the method according to the present invention further includes either a friction reducer, or a viscosity enhancer.

### Friction Reducers

Friction reducers are used in water or other water-based fluids used in hydraulic fracturing treatments for subterranean well formations in order to improve permeability of the desired gas and/or oil being recovered from the fluid-conductive cracks or pathways created through the fracking process. The friction reducers allow the water to be pumped into the formations more quickly. Various polymer additives have been widely used as friction reducers to enhance or modify the characteristics of the aqueous fluids used in well drilling, recovery and production applications.

Examples of commonly used friction reducers include polyacrylamide polymers and copolymers. In an aspect, additional suitable friction reducers may include acrylamide-derived polymers and copolymers, such as polyacrylamide (sometime abbreviated as PAM), acrylamide-acrylate (acrylic acid) copolymers, acrylic acid-methacrylamide copolymers, partially hydrolyzed polyacrylamide copolymers (PHPA), partially hydrolyzed polymethacrylamide, acrylamide-methylpropane sulfonate copolymers (AMPS). Various derivatives of such polymers and copolymers, *e.g*., quaternary amine salts, hydrolyzed versions, should be understood to be included with the polymers and copolymers described herein.

Friction reducers are combined with water and/or other aqueous fluids, which in combination are often referred to as "slick water" fluids. Slick water fluids have reduced frictional drag and beneficial flow characteristics which enable the pumping of the aqueous fluids into various gas- and/or oil-producing areas, including for example for fracturing.

In an aspect of the invention, the friction reducer is present in a use solution in an amount between 50 ppm to 5,000 ppm preferably in an amount between 100 ppm to 1,000 ppm. In a further aspect, the friction reducer is present in a use solution in an amount of at least 0.01 wt-% to 10 wt-%, preferably at least 0.01 wt-% to 5 wt-%, preferably at least 0.01 wt-% to 1 wt-%, more preferably at least 0.01 wt-% to 0.5 wt-%, and still more preferably at least 0.01 wt-% to 0.1 wt-%. Beneficially, the compositions and methods of the invention do not negatively interfere with friction reducers included in an aqueous solution. Without being limited to a particular theory of the invention, it is thought that the reduction and/or elimination of the oxidant hydrogen peroxide from the peracid composition promotes the stability and efficacy of any variation in the amount of friction reducer present in a use solution.

### Viscosity Enhancers

Viscosity enhancers are additional polymers used in water or other water-based fluids used in hydraulic fracturing treatments to provide viscosity enhancement. Natural and/or synthetic viscosity-increasing polymers may be employed in compositions and methods according to the invention. Viscosity enhancers may also be referred to as gelling agents and examples include guar, xanthan, cellulose derivatives and polyacrylamide and polyacrylate polymers and copolymers.

In an aspect of the invention, the viscosity enhancer is present in a use solution in an amount between 100 ppm to 1,000 ppm. In a further aspect, the viscosity enhancer is present in a use solution in an amount of at least 0.01 wt-% to 10 wt-%, preferably at least 0.01 wt-% to 5 wt-%, preferably at least 0.01 wt-% to 1 wt-%, at least 0.01 wt-% to 2 wt-%, preferably at least 0.01 wt-% to 1 wt-%, preferably at least 0.01 wt-% to 0.5 wt-%. Beneficially, the compositions and methods of the invention do not negatively interfere with viscosity enhancer included in an aqueous solution. Without being limited to a particular theory of the invention, it is believed the reduction and/or elimination of the oxidant hydrogen peroxide from the peracid composition promotes the stability and efficacy of any variation in the amount of viscosity enhancer present in a use solution.

### Additional Optional Materials

The present compositions can optionally include additional ingredients. Additional optional functional ingredients may include for example, peracid stabilizers, emulsifiers, corrosion inhibitors and/or descaling agents (*i.e.* scale inhibitors), surfactants and/or additional antimicrobial agents for enhanced efficacy (*e.g.* mixed peracids, biocides), antifoaming agents, acidulants (*e.g.* strong mineral acids), and additional carboxylic acids. In an embodiment, no additional functional ingredients are employed.

### Corrosion Inhibitors

Corrosion inhibitors are additional molecules used in oil and gas recovery operations. Corrosion inhibitors that may be employed in the present disclosure include the exemplary corrosion inhibitors disclosed in U.S. Patent No. 5,965,785, U.S. Patent Application Ser. No. 12/263,904, GB Pat. No. 1,198,734, WO/03/006581, WO04/044266, and WO08/005058.

In an aspect of the invention, a corrosion inhibitor is present in a use solution in an amount between 100 ppm to 1,000 ppm. In a further aspect, a corrosion inhibitor is present in a use solution in an amount of at least 0.0001 wt-% to 10 wt-%, preferably at least 0.0001 wt-% to 5 wt-%, preferably at least 0.0001 wt-% to 1 wt-%, preferably at least 0.0001 wt-% to 0.1 wt-%, and still more preferably at least 0.0001 wt-% to 0.05 wt-%. Beneficially, the compositions and methods of the invention do not negatively interfere with corrosion inhibitor included in an aqueous solution. Without being limited to a particular theory of the invention, it is believed the reduction and/or elimination of the oxidant hydrogen peroxide from the peracid composition promotes the stability and efficacy of any variation in the amount of corrosion inhibitor present in a use solution.

### Scale Inhibitors

Scale inhibitors are additional molecules used in oil and gas recovery operations. Common scale inhibitors that may be employed in these types of applications include polymers and co-polymers, phosphates, phosphate esters.

In an aspect of the invention, a scale inhibitor is present in a use solution in an amount between 100 ppm to 1,000 ppm. In a further aspect, a scale inhibitor is present in a use solution in an amount of at least 0.0001 wt-% to 10 wt-%, at least 0.0001 wt-% to 1 wt-%, preferably at least 0.0001 wt-% to 0.1 wt-%, preferably at least 0.0001 wt-% to 0.05 wt-%. Beneficially, the compositions and methods of the invention do not negatively interfere with scale inhibitor included in an aqueous solution. Without being limited to a particular theory of the invention, it is thought that the reduction and/or elimination of the oxidant hydrogen peroxide from the peracid composition promotes the stability and efficacy of any variation in the amount of scale inhibitor present in a use solution.

### Additional Antimicrobial Agents

Additional antimicrobial agents may be included in the compositions and/or methods of the invention for enhanced antimicrobial efficacy. In addition to the use of peracid compositions, additional antimicrobial agents and biocides may be employed. Additional biocides may include, for example, a quaternary ammonium compound as disclosed in U.S. Patent No. 6,627,657. Beneficially, the presence of the quaternary ammonium compound provides both synergistic antimicrobial efficacies with peracids, as well as maintains long term biocidal efficacy of the compositions.

In another embodiment, the additional biocide may include an oxidizer compatible phosphonium biocide, such as tributyl tetradecyl phosphonium chloride. The phosphonium biocide provides similar antimicrobial advantages as the quaternary ammonium compound in combination with the peracids. In addition, the phosphonium biocide is compatible with the anionic polymeric chemicals commonly used in the oil field applications, such as the methods of the fracking disclosed according to the invention.

Additional antimicrobial and biocide agents may be employed in amounts sufficient to provide antimicrobial efficacy, as may vary depending upon the water source in need of treatment and the contaminants therein. Such agents may be present in a use solution in an amount of at least 0.1 wt-% to 50 wt-%, preferably at least 0.1 wt-% to 20 wt-%, more preferably from 0.1 wt-% to 10 wt-%.

### Acidulants

Acidulants may be included as additional functional ingredients in a composition according to the invention. In an aspect, a strong mineral acid such as nitric acid or sulfuric acid can be used to treat water sources, as disclosed in U.S. Patent No. 4,587,264. The combined use of a strong mineral acid with the peracid composition provides enhanced antimicrobial efficacy as a result of the acidity assisting in removing chemical contaminants within the water source (*e.g.* sulfite and sulfide species). In addition, some strong mineral acids, such as nitric acid, provide a further benefit of reducing the risk of corrosion toward metals contacted by the peracid compositions according to the invention. Exemplary products are commercially available from Enviro Tech Chemical Services, Inc. (Reflex brand) and from Solvay Chemicals (Proxitane^{®} NT brand).

Acidulants may be employed in amounts sufficient to provide the intended antimicrobial efficacy and/or anticorrosion benefits, as may vary depending upon the water source in need of treatment and the contaminants therein. Such agents may be present in a use solution in an amount of at least 0.1 wt-% to 50 wt-%, preferably at least 0.1 wt-% to 20 wt-%, more preferably from 0.1 wt-% to 10 wt-%.

### Catalase and Peroxidase Enzyme

In an aspect of the invention, a catalase or peroxidase enzyme is used to reduce and/or eliminate the concentration of hydrogen peroxide in an antimicrobial peracid composition. The enzymes catalyze the decomposition of hydrogen peroxide to water and oxygen. Beneficially, the reduction and/or elimination of hydrogen peroxide (strong oxidizer) results in other additives for a water treatment source (*e.g.* water source) not being degraded or rendered incompatible. Various additives used to enhance or modify the characteristics of the aqueous fluids used in well drilling, recovery and production applications are at risk of degradation by the oxidizing effects of hydrogen peroxide. These may include for example, friction reducers and viscosity enhancers used in commercial well drilling, well completion and stimulation, or production applications.

Various sources of catalase enzymes may be employed according to the invention, including: animal sources such as bovine catalase isolated from beef livers; fungal catalases isolated from fungi including *Penicillium chrysogenum, Penicillium notatum,* and *Aspergillus niger;* plant sources; bacterial sources such as *Staphylcoccus aureus,* and genetic variations and modifications thereof. In an aspect of the invention, fungal catalases are utilized to reduce the hydrogen peroxide content of a peracid composition. Catalases are commercially available in various forms, including liquid and spray dried forms. Commercially available catalase includes both the active enzyme as well as additional ingredients to enhance the stability of the enzyme. Some exemplary commercially available catalase enzymes include Genencor CA-100 and CA-400, as well as Mitsubishi Gas and Chemical (MGC) ASC super G and ASC super 200, and Optimase CA 400L from Genecor International. Additional description of suitable catalase enzymes are disclosed in U.S. Patent Publication No. 2009/0269324.

In an aspect of the invention, catalase enzymes have a high ability to decompose hydrogen peroxide. Beneficially, the reduction or elimination of hydrogen peroxide from oxidizing compositions obviates the various detriments caused by oxidizing agents. In particular, the use of catalase with the peracids compositions provides enhanced antimicrobial benefits without causing the damage associated with conventional oxidizing agents (*e.g.* peracetic acid, hypochlorite or hypochlorous acid, and/or chlorine dioxide), such as corrosion.

Peroxidase enzymes may also be employed to decompose hydrogen peroxide from a peracid composition. Although peroxidase enzymes primarily function to enable oxidation of substrates by hydrogen peroxide, they are also suitable for effectively lowering hydrogen peroxide to peracid ratios in compositions. Various sources of peroxidase enzymes may be employed according to the invention, including for example animal sources, fungal peroxidases, and genetic variations and modifications thereof. Peroxidases are commercially available in various forms, including liquid and spray dried forms. Commercially available peroxidases include both the active enzyme as well as additional ingredients to enhance the stability of the enzyme.

In some embodiments, the catalase or peroxidase enzyme is able to degrade at least 50% of the initial concentration of hydrogen peroxide in a peracid composition. Preferably, the enzyme is provided in sufficient amount to reduce the hydrogen peroxide concentration of a peracid composition by at least more than 50%, more preferably at least 60%, at least 70%, at least 80%, at least 90%. In some embodiments, the enzyme reduces the hydrogen peroxide concentration of a peracid composition by more than 90%.

In an aspect of the invention, the enzymes are suitable for use and have a tolerance to a wide range of temperatures, including the temperatures ranges in water treatment applications which may range from 0 - 180 °C. A suitable catalase enzyme will maintain at least 50% of its activity under such storage and/or application temperatures for at least 10 minutes, preferably for at least 1 hour.

In a further aspect of the invention, the catalase or peroxidase enzymes described herein have a tolerance to pH ranges found in water treatment applications. Acetic acid levels (or other carboxylic acid) in a water treatment application can widely range in parts per million (ppm) of acetic or other carboxylic acid. The solutions may have a corresponding range of pH range from greater than 0 to 10. A suitable catalase or peroxidase enzyme will maintain at least 50% of its activity in such solutions of acetic or other carboxylic acid over a period of 10 minutes.

In an aspect of the invention, a catalase or peroxidase enzyme is present in a use solution of the water treatment and peracid composition in sufficient amounts to reduce the concentration of hydrogen peroxide from the peracid composition by at least 50% within 10 minutes, preferably within 5 minutes, preferably within 2 to 5 minutes, more preferably within 1 minute. The ranges of concentration of the enzymes will vary depending upon the amount of time within which 50% of the hydrogen peroxide from the peracid composition is removed. In certain aspects of the invention, a catalase or peroxidase enzyme is present in a use solution composition including the water source to be treated in amounts between 1 ppm and 1,000 ppm, preferably between 5 ppm and 500 ppm, and more preferably between 10 ppm and 100 ppm.

### Uses of the present compositions

In another aspect, the present disclosure is directed to a method for storing a percarboxylic acid containing composition, which method comprises storing the above compositions, wherein said composition retains at least 80% of the C₁-C₂₂ percarboxylic acid activity after storage for any suitable time under any suitable conditions, *e.g*., retaining at least 80% of the C₁-C₂₂ percarboxylic acid activity after storage of 30 days at 50°C. Preferably, the compositions retain at least 85%, 90% or higher of the C₁-C₂₂ percarboxylic acid activity after storage of 30 days at 50°C.

In still another aspect, the present disclosure is directed to a method for transporting a percarboxylic acid containing composition, which method comprises transporting the above compositions under ambient conditions, preferably in bulk *e.g.,* 3.785 L (1,000 gallons) and above, wherein the SADT of said composition is at least 45°C during transportation. Preferably, the SADT of said composition is higher than at least 50°C, 55°C, 60°C 65°C or 70°C.

In yet another aspect, the present disclosure is directed to a method for treating water, which method comprises providing the above compositions to a water source in need of treatment to form a treated water source, wherein said treated water source comprises from 1 ppm to 1,000 ppm of said C₁-C₂₂ percarboxylic acid.

The methods can be used to treat any suitable or desirable water sources. For example, the methods can be used to treat fresh water, pond water, sea water, produced water and a combination thereof. In some embodiments, the water source comprises at least 1 wt-% produced water. In other embodiments, the water source comprises at least 1 wt-%, 2 wt-%, 3 wt-%, 4 wt-%, 5 wt-%, 6 wt-%, 7 wt-%, 8 wt-%, 9 wt-%, or 10 wt-%, 15 wt-%, 20 wt-%, 25 wt-%, 30 wt-% or more produced water.

The treated water source can comprise any suitable concentration of the C₁-C₂₂ percarboxylic acid. In some embodiments, the treated water source comprises from 10 ppm to 200 ppm of the C₁-C₂₂ percarboxylic acid. In other embodiments, the treated water source comprises 1 ppm, 10 ppm, 100 ppm, 200 ppm, 300 ppm, 400 ppm, 500 ppm, 600 ppm, 700 ppm, 800 ppm, 900 ppm or1,000 ppm of the C₁-C₂₂ percarboxylic acid. The methods can be used to treat any suitable or desirable water sources. In another example, the methods can be used to treat fresh water, pond water, sea water, produced water and a combination thereof. In some embodiments, the water source comprises at least 1 wt-% produced water. In other embodiments, the water source comprises at least 1 wt-%, 2 wt-%, 3 wt-%, 4 wt-%, 5 wt-%, 6 wt-%, 7 wt-%, 8 wt-%, 9 wt-%, or 10 wt-%, 15 wt-%, ₂0 wt-%, 25 wt-%, 30 wt-% or more produced water.

Any suitable C₁-C₂₂ percarboxylic acid can be used in said methods. For example, peroxyacetic acid, peroxyoctanoic acid and/or peroxysulfonated oleic acid can be used. In some embodiments, a combination of peroxyacetic acid, peroxyoctanoic acid and peroxysulfonated oleic acid is used.

The treated water source can comprise any suitable concentration of the hydrogen peroxide. In some embodiments, the treated water source comprises from 1 ppm to 15 ppm of the hydrogen peroxide. In other embodiments, the treated water source comprises 1 ppm, 2 ppm, 3 ppm, 4 ppm, 5 ppm, 6 ppm, 7 ppm, 8 ppm, 9 ppm, 10 ppm, 11 ppm, 12 ppm, 13 ppm, 14 ppm, or 15 ppm of the hydrogen peroxide.

The treated water source can retain any suitable concentration and/or percentage of the initial C₁-C₂₂ percarboxylic acid activity in the treated water source for any suitable time period after the treated water source is formed. In some embodiments, the treated water source retains at least 60%, 65%, 70%, 75%, 80%, 85% or 90% of the initial C₁-C₂₂ percarboxylic acid activity in the treated water source for a suitable time after the treated water source is formed. In other embodiments, the treated water source retains at least 60%, 65%, 70%, 75%, 80%, 85% or 90% of the initial C₁-C₂₂ percarboxylic acid activity in the treated water source for at least 15 minutes after the treated water source is formed.

In some embodiments, the level of a microorganism, if present in the water source, is stabilized or reduced by said methods. For example, at least 10%, 20%, 30%, 40%, 50%, 60%, 70%, 80%, or 90% or more of the microorganism, if present in the water source, is killed, destroyed, removed and/or inactivated by the present methods.

In some embodiments, the antimicrobial efficacy of the composition used in the present methods on the treated water source is comparable to antimicrobial effect of a water source that does not contain produced water. In other embodiments, the treated water source reduces corrosion caused by hydrogen peroxide and reduces microbial-induced corrosion, and the composition used in the present methods does not substantially interfere with a friction reducer, a viscosity enhancer, other functional ingredients present in the treated water source, or a combination thereof.

In some embodiments, the present methods can comprise adding a peroxidase or a catalase to further reduce the hydrogen peroxide level in the treated water source. The peroxidase or catalase can be added in any suitable manner. In some embodiments, the peroxidase or catalase can be added to the water source before a composition used in the present methods is provided to the water source. In other embodiments, the compositions can be diluted into a suitable intermediate volume, and the peroxidase or catalase can be added to the diluted, intermediate volume. Thereafter, the diluted, intermediate volume, which contains the peroxidase or catalase, can be added to the water source. Any suitable peroxidase or catalase, including the ones described below, can be used in the present methods.

In some embodiments, the present methods can further comprise directing the treated water source into a subterranean environment or disposing of the treated water source.

In some embodiments, the water source treated by the present methods does not comprise reuse water, the treated water source comprises from 10 ppm to 20 ppm of the C₁-C₂₂ percarboxylic acid and from 1 ppm to 2 ppm of hydrogen peroxide and the treated water source does not comprise a friction reducer and/or a rheology modifier.

In some embodiments, the water source treated by the present methods is a blended water source that comprises 80 wt-% fresh water or pond water and 20 wt-% of reuse water, the treated water source comprises from 25 ppm to 35 ppm of the C₁-C₂₂ percarboxylic acid and from 2 ppm to 3 ppm of hydrogen peroxide and catalase, the treated water source does not comprise a friction reducer and/or a rheology modifier, and the treated water source is formed before reaching a blending tub.

In some embodiments, the water source treated by the present methods is a blended water source that comprises 80 wt-% fresh water or pond water and 20 wt-% of reuse water, the treated water source comprises from 25 ppm to 35 ppm of the C₁-C₂₂ percarboxylic acid and from 2 ppm to 3 ppm of hydrogen peroxide and catalase, the treated water source comprises a friction reducer and/or a rheology modifier, and the treated water source is formed in a blending tub.

In some embodiments, the treated water source comprises from 30 ppm or less of the C₁-C₂₂ percarboxylic acid and 0.5 ppm or less of the hydrogen peroxide, the treated water source comprises a friction reducer and/or a rheology modifier, and the treated water source is directed into or is at a subterranean environment.

In some aspects, the methods disclosed for water treatment in oil and gas recovery provide effective antimicrobial efficacy without deleterious interaction with functional agents, including for example friction reducers. In a further aspect, the methods for water treatment provide increased antimicrobial efficacy compared to the use of the antimicrobial peracids alone. In a still further aspect, the methods of use result in the disposal of cleaner water with low numbers of microorganisms. In yet a further aspect of the methods of the invention, the reduction and/or elimination of H₂O₂ from the peracid compositions minimizes the negative effects of the oxidant H₂O₂. Still further, the methods of the invention reduce the volume expansion within sealed systems used in oil and gas recovery methods, as a result of the reduction and/or elimination of H₂O₂ from the systems.

### Use in Water Treatment

The treated peracid compositions can be used for a variety of industrial applications, *e.g*., to reduce microbial or viral populations on a surface or object or in a body or stream of water. In some aspects, the disclosure includes methods of using the treated peracid compositions to prevent biological fouling in various industrial processes and industries, including oil and gas operations, to control microorganism growth, eliminate microbial contamination, limit or prevent biological fouling in liquid systems, process waters or on the surfaces of equipment that come in contact with such liquid systems. As referred to herein, microbial contamination can occur in various industrial liquid systems including, but not limited to, air-borne contamination, water make-up, process leaks and improperly cleaned equipment. In another aspect, peracid and catalase compositions (or other treated peracid compositions having low to substantially no hydrogen peroxide) are used to control the growth of microorganisms in water used in various oil and gas operations. In a further aspect, the compositions are suitable for incorporating into fracturing fluids to control or eliminate microorganisms.

As used herein for the methods of the invention, treated peracid compositions can employ a variety of peracid compositions having a low to substantially no hydrogen peroxide concentration. These treated peracid compositions include peracid compositions with a catalase or peroxidase enzyme to reduce the hydrogen peroxide to peracid ratio and/or other reduced hydrogen peroxide peracid compositions disclosed herein. In a preferred embodiment peracid and catalase use solutions having reduced or substantially no hydrogen peroxide are introduced to a water source in need of treatment.

The methods by which the treated peracid use solutions are introduced into the aqueous fluids according to the invention are not critical. Introduction of the treated peracid compositions may be carried out in a continuous or intermittent manner and will depend on the type of water being treated. In some embodiments, the treated peracid compositions are introduced into an aqueous fluid according to the methods disclosed in U.S. Patent Application Serial No. 13/645,671 (Attorney Docket No. 8421), titled "New Method and Arrangement for Feeding Chemicals into a Hydrofracturing Process and Oil and Gas Applications".

In an aspect, the treated peracid use solutions are added to waters in need of treatment prior to the drilling and fracking steps in order to restrict the introduction of microbes into the reservoir and to prevent the microbes from having a negative effect on the integrity of the fluids. The treatment of source waters (*e.g.* pond, lake, municipal, etc.) and/or produced waters is particularly well suited for use according to the invention.

The treated waters according to the invention can be used for both slick water fracturing (*i.e.* using frictions reducers) and/or gel fracturing (*i.e.* using viscosity enhancers), depending on the type of formation being fractured and the type of hydrocarbon expected to be produced. Use of a treated peracid use solution, including a catalase treated peracid composition use solution having low to substantially no hydrogen peroxide, is suitable for both slick water fracturing and gel fracturing.

In an aspect, pretreating the peracid peracetic acid (including a mixture of acetic acid, hydrogen peroxide and water) with catalase substantially removes the hydrogen peroxide with minimal to no impact on the fracturing fluids and the well itself. In an aspect, the peracetic acid pretreated with catalase allows the formation of gel suitable for gel fracturing, as opposed to untreated peracetic acid/hydrogen peroxide solutions that do not allow a gel to form under certain conditions. In a further aspect, the treated peracid use solutions are added to waters in need of treatment in the subterranean well formations (*e.g.* introduced through a bore hole in a subterranean formation). These methods provide additional control within the well formation suitable for reducing microbial populations already present within the down hole tubing in the well or within the reservoir itself.

In a still further aspect, the treated peracid use solutions are added to waters in need of treatment before disposal. In such an aspect, flow back waters (*e.g.* post fracking) are treated to minimize microbial contaminations in the waters and to remove solids prior to disposal of the water into a subterranean well, reuse in a subsequent fracturing application or return of the water into local environmental water sources.

In an aspect, the water source in need of treatment may vary significantly. For example, the water source may be a freshwater source (*e.g.* pond water), salt water or brine source, brackish water source, recycled water source, or the like. In an aspect, wherein offshore well drilling operations are involved, seawater sources are often employed (*e.g.* saltwater or non-saltwater). Beneficially, the peracid compositions, with or without catalase, of the invention are suitable for use with any types of water and provide effective antimicrobial efficiency with any of such water sources.

Large volumes of water are employed according to the invention as required in well fluid operations. As a result, in an aspect of the invention, recycled water sources (*e.g.* produced waters) are often employed to reduce the amount of a freshwater, pond water or seawater source required. Recycled or produced water are understood to include non-potable water sources. The use of such produced waters (in combination with freshwater, pond water or seawater) reduces certain economic and/or environmental constraints. In an aspect of the invention, thousands to millions of gallons of water may be employed and the combination of produced water with fresh water sources provides significant economic and environmental advantages. In an aspect of the invention, as much produced water as practical is employed. In an embodiment at least 1% produced water is employed, preferably at least 5% produced water is employed, preferably at least 10% produced water is employed, preferably at least 20% produced water is employed, or more preferably more than 20% produced water is employed.

In an aspect of the invention, the method includes a pretreatment step, wherein the peracid composition is treated with a catalase enzyme to reduce the hydrogen peroxide concentration in a use solution. The pretreatment step occurs prior to combining the peracid antimicrobial composition and/or catalase to a water source in need of treatment. In an aspect of the invention, the pretreatment may occur within a few minutes to hours before addition to a water source. Preferably, a commercial peracid formulation is employed (*e.g.* peracetic acid). Thereafter, the peracid and catalase composition use solution may be diluted to obtain the desired peracetic acid concentrations, with low and/or no hydrogen peroxide concentration.

According to embodiments of the invention, a sufficient amount of the pretreated peracid use solution composition, with or without catalase, is added to the aqueous water source in need of treatment to provide the desired peracid concentration for antimicrobial efficacy. For example, a water source is dosed amounts of the peracid and catalase use solution composition until a peracid concentration within the water source is detected within the preferred concentration range (*e.g.* 1 ppm to 100 ppm peracid). In an aspect, it is preferred to have a microbial count of less than 100,000 microbes/mL, more preferably less than 10,000 microbes/mL, or more preferably less than 1,000 microbes/mL.

The methods of use as described herein can vary in the temperature and pH conditions associated with use of the aqueous treatment fluids. For example, the aqueous treatment fluids may be subjected to varying ambient temperatures according to the applications of use disclosed herein, including ranging from 0°C to 130°C in the course of the treatment operations. Preferably, the temperature range is between 5°C to 100°C, more preferably between 10°C to 80°C. However, as a majority of the antimicrobial activity of the compositions of the invention occurs over a short period of time, the exposure of the compositions to relatively high temperatures is not a substantial concern. In addition, the peracid composition aqueous treatment fluids (*i.e.* use solutions) may be subjected to varying pH ranges, such as from 1 to 10.5. Preferably, the pH range is less than 9, less than 8.2 (pKa value of the representative peracid peracetic acid) to ensure the effective antimicrobial efficacy of the peracid.

The antimicrobial compositions of the invention are fast-acting. However, the present methods require a certain minimal contact time of the compositions with the water in need of treatment for occurrence of sufficient antimicrobial effect. The contact time can vary with concentration of the use compositions, method of applying the use compositions, temperature of the use compositions, pH of the use compositions, amount of water to be treated, amount of soil or substrates in the water to be treated, or the like. The contact or exposure time can be at least 15 seconds. In some embodiments, the exposure time is 1 to 5 minutes. In other embodiments, the exposure time is at least 10 minutes, 30 minutes, or 60 minutes. In other embodiments, the exposure time is a few minutes to hours. The contact time will further vary based upon the concentration of peracid in a use solution.

### Beneficial Effects of the Methods of Use in Water Treatment

In an aspect, the methods of use provide an antimicrobial for use that does not negatively impact the environment. Beneficially, the degradation of the compositions of the invention provides a "green" alternative. In an aspect of the invention, utilizing peroxyacetic acid is beneficial as the by-products are non-toxic, non-persistent in the environment, certified as organic and permitted for discharge in surface waters.

In a further aspect, the methods of use provide an antimicrobial for use that does not negatively interfere with friction reducers, viscosity enhancers and/or other functional ingredients. In a further aspect, the methods of use do not negatively interfere with any additional functional agents utilized in the water treatment methods, including for example, corrosion inhibitors, descaling agents. The compositions administered according to the invention provide extremely effective control of microorganisms without adversely affecting the functional properties of any additive polymers of an aqueous system. In addition, the treated peracid composition use solutions provide additional benefits to a system, including for example, reducing corrosion within the system due to the decreased or substantially eliminated hydrogen peroxide from a treated peracid composition. Beneficially, the non-deleterious effects of the treated peracid compositions (with or without a catalase) on the various functional ingredients used in water treatment methods are achieved regardless of the make-up of the water source in need of treatment.

In an additional aspect, the methods of use prevent the contamination of systems, such as well or reservoir souring. In further aspects, the methods of use prevent microbiologically-influenced corrosion of the systems upon which it is employed.

In additional aspects of the invention, the reduction and/or elimination of H₂O₂ from the systems reduces volume expansion within sealed systems (*e.g.* wells). As a result there is a significantly decreased or eliminated risk of well blow outs due to the removal of gases within the antimicrobial compositions used for treating the various water sources.

In further aspects, the methods of use employ the antimicrobial and/or bleaching activity of the peracid compositions. For example, the invention includes a method for reducing a microbial population and/or a method for bleaching. These methods can operate on an article, surface, in a body or stream of water or a gas, by contacting the article, surface, body, or stream with the compositions. Contacting can include any of numerous methods for applying the compositions, including, but not limited to, providing the antimicrobial peracid compositions in an aqueous use solution and immersing any articles, and/or providing to a water source in need of treatment.

The compositions are suitable for antimicrobial efficacy against a broad spectrum of microorganisms, providing broad spectrum bactericidal and fungistatic activity. For example, the peracid biocides of this invention provide broad spectrum activity against wide range of different types of microorganisms (including both aerobic and anaerobic microorganisms), including bacteria, yeasts, molds, fungi, algae, and other problematic microorganisms associated with oil- and gas-field operations.

Exemplary microorganisms susceptible to the peracid compositions of the invention include, gram positive bacteria (*e.g., Staphylococcus aureus, Bacillus* species (sp.) like *Bacillus subtilis, Clostridia* sp.), gram negative bacteria (*e.g., Escherichia coli, Pseudomonas* sp., *Klebsiella pneumoniae, Legionella pneumophila, Enterobacter* sp., *Serratia* sp., *Desulfovibrio* sp., and *Desulfotomaculum* sp.), yeasts (*e.g., Saccharomyces cerevisiae* and *Candida albicans*), molds (*e.g., Aspergillus niger, Cephalosporium acremonium, Penicillium notatum,* and *Aureobasidium pullulans*), filamentous fungi (*e.g., Aspergillus niger* and *Cladosporium resinae*), algae (*e.g., Chlorella vulgaris, Euglena gracilis,* and *Selenastrum capricornutum*), and other analogous microorganisms and unicellular organisms (*e.g.*, phytoplankton and protozoa). Other exemplary microorganisms susceptible to the peracid compositions of the invention include the exemplary microorganisms disclosed in U.S. patent application US 2010/0160449 A1, *e.g.,* the sulfur- or sulfate-reducing bacteria, such as *Desulfovibrio* and *Desulfotomaculum* species.

### Use in Other Treatments

Additional embodiments of the invention include water treatments for various industrial processes for treating liquid systems. As used herein, "liquid system" refers to flood waters or an environment within at least one artificial artifact, containing a substantial amount of liquid that is capable of undergoing biological fouling. Liquid systems include but are not limited to industrial liquid systems, industrial water systems, liquid process streams, industrial liquid process streams, industrial process water systems, process water applications, process waters, utility waters, water used in manufacturing, water used in industrial services, aqueous liquid streams, liquid streams containing two or more liquid phases, and any combination thereof.

**In** a further aspect, the compositions can also be used to treat other liquid systems where both the compositions' antimicrobial function and oxidant properties can be utilized. Aside from the microbial issues surrounding waste water, waste water is often rich in malodorous compounds of reduced sulfur, nitrogen or phosphorous. A strong oxidant such as the compositions disclosed herein converts these compounds efficiently to their odor free derivatives *e.g.* the sulfates, phosphates and amine oxides. These same properties are very useful in the pulp and paper industry where the property of bleaching is also of great utility.

### C. Slick water compositions and uses thereof

In particular, the present invention relates to slick water compositions used in a method for oil and/or gas drilling that comprise stable percarboxylic acid compositions. In one aspect the composition comprises:
1) a C₁-C₂₂ carboxylic acid;
2) a C₁-C₂₂ percarboxylic acid;
3) hydrogen peroxide;
4) a first stabilizing agent, which is picolinic acid or a compound having the following Formula (IA): 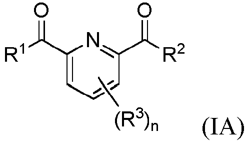 wherein
   R¹ is OH or -NR^{1a}R^{1b}, wherein R^{1a} and R^{1b} are independently hydrogen or (C₁ - C₆)alkyl;
   R² is OH or -NR^{2a}R^{2b}, wherein R^{2a} and R^{2b} are independently hydrogen or (C₁ - C₆)alkyl;
   each R³ is independently (C₁ -C₆)alkyl, (C₂ -C₆)alkenyl or (C₂ -C₆)alkynyl; and n is a number from zero to 3;
   or a salt thereof;
   or a compound having the following Formula (IB): 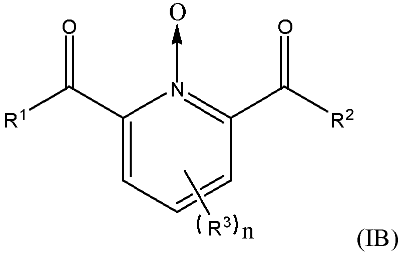
   wherein
   R¹ is OH or -NR^{1a}R^{1b}, wherein R^{1a} and R^{1b} are independently hydrogen or (C₁ - C₆)alkyl;
   R² is OH or -NR^{2a}R^{2b}, wherein R^{2a} and R^{2b} are independently hydrogen or (C₁ - C₆)alkyl;
   each R³ is independently (C₁ -C₆)alkyl, (C₂ -C₆)alkenyl or (C₂ -C₆)alkynyl; and n is a number from zero to 3;
   or a salt thereof;
5) a second stabilizing agent, which is a compound having the following Formula (IIA): 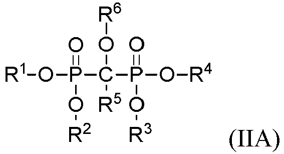 wherein
   R¹, R², R³, and R⁴ are independently hydrogen, (C₁ -C₆)alkyl, (C₂ -C₆)alkenyl or (C₂ -C₆)alkynyl, or C₆₋₂₀ aryl;
   R⁵ is (C₁ -C₆)alkyl, (C₂ -C₆)alkenyl or (C₂ -C₆)alkynyl; and
   R⁶ is hydrogen, (C₁ -C₆)alkyl, (C₂ -C₆)alkenyl or (C₂ -C₆)alkynyl;
   or a salt thereof;
   or a compound having the following Formula (IIB): 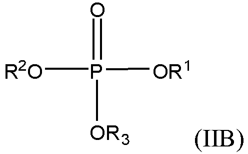
   wherein
   R¹, R², and R³ are independently hydrogen, (C₁ -C₆)alkyl, (C₂ -C₆)alkenyl or (C₂ -C₆)alkynyl, or C₆-₂₀ aryl;
   or a salt thereof;
6) a friction reducer; and
   wherein said hydrogen peroxide has a concentration of 1 ppm to 20 ppm, and the C₁-C₂₂ percarboxylic acid has a concentration of at least 2 times of the concentration of said hydrogen peroxide.

In some embodiments, the composition is an equilibrated composition that comprises peracid, hydrogen peroxide, carboxylic acid and a solvent, *e.g.*, water. In some embodiments, the present composition does not comprise a mineral acid, *e.g.,* the mineral acids disclosed in WO 91/07375.

The composition can comprise any suitable level of the hydrogen peroxide. In some embodiments, the hydrogen peroxide in the compositions has a concentration of 1 ppm to 10 ppm, *e.g.,* 1 ppm, 2 ppm, 3 ppm, 4 ppm, 5 ppm, 6 ppm, 7 ppm, 8 ppm, 9 ppm, or 10 ppm.

In some embodiments, the C₁-C₂₂ percarboxylic acid has a concentration of at least 6 times of the concentration of the hydrogen peroxide. In other embodiments, the C₁-C₂₂ percarboxylic acid has a concentration of at least 10 times of the concentration of the hydrogen peroxide. In still other embodiments, the C₁-C₂₂ percarboxylic acid has a concentration of at least 2, 3, 4, 5, 6, 7, 8, 9 or 10 times of the concentration of the hydrogen peroxide.

The composition can comprise any suitable friction reducer. In some embodiments, the friction reducer is a polyacrylamide polymer and/or copolymer, or an acrylamide-derived polymer and/or copolymer. Other exemplary friction reducers include the ones described in the above Section B. The present composition can comprise any suitable level of the friction reducer. In some embodiments, the friction reducer has a concentration from 50 ppm to 5,000 ppm, preferably from 100 ppm to 1,000 ppm. In other embodiments, the friction reducer has a concentration at 50 ppm, 100 ppm, 200 ppm, 300 ppm, 400 ppm, 500 ppm, 600 ppm, 700 ppm, 800 ppm, 900 ppm, 1,000 ppm, 2,000 ppm, 3,000 ppm, 4,000 ppm, or 5,000 ppm.

The composition can further comprise any substances suitable for oil and/or gas drilling. In some embodiments, the present composition can further comprise a proppant, a surfactant and/or a scale inhibitor. Any suitable proppant can be used. In some embodiments, the proppant is a sand or a ceramic bead. Any suitable scale inhibitor can be used. In some embodiments, the scale inhibitor is a polymer, a phosphonate or a phosphate ester.

Any suitable C₁-C₂₂ percarboxylic acid can be used in the compositions. In some embodiments, the C₁-C₂₂ percarboxylic acid is a C₂-C₂₀ percarboxylic acid. In other embodiments, the C₁-C₂₂ percarboxylic acid comprises peroxyacetic acid, peroxyoctanoic acid and/or peroxysulfonated oleic acid. Other exemplary C₁-C₂₂ percarboxylic acids are described in the above Section B. The composition can comprise any suitable level of the C₁-C₂₂ percarboxylic acid and hydrogen peroxide. In some embodiments, the C₁-C₂₂ percarboxylic acid has a concentration from 10 ppm to 30 ppm, *e.g.,* 10 ppm, 15 ppm, 20 ppm, 25 ppm, or 30 ppm, and the hydrogen peroxide has a concentration from 1 ppm to 3 ppm, *e.g.,* 1 ppm, 1.5 ppm, 2 ppm, 2.5 ppm, or 3 ppm.

In some embodiments, the first stabilizing agent is picolinic acid, or a salt thereof. In other embodiments, the first stabilizing agent is 2,6-pyridinedicarboxylic acid, or a salt thereof. The first stabilizing agent can be used at any suitable concentration. In some embodiments, the first stabilizing agent has a concentration from 0.005 wt-% to 5 wt-%. In other embodiments, the first stabilizing agent has a concentration from 0.05 wt-% to 0.15 wt-%. In still other embodiments, the first stabilizing agent has a concentration at 0.005 wt-%, 0.01 wt-%, 0.1 wt-%, 1 wt-%,2 wt-%, 3 wt-%, 4 wt-%, or 5 wt-%. In yet other embodiments, the first stabilizing agent has a concentration at 0.05 wt-%, 0.06 wt-%, 0.07 wt-%, 0.08 wt-%, 0.09 wt-%, 0.10 wt-%, 0.11 wt-%, 0.12 wt-%, 0.13 wt-%, 0.14 wt-%, or 0.15 wt-%.

In some embodiments, the second stabilizing agent is 1-hydroxy ethylidene-1,1-diphosphonic acid (HEDP), or a salt thereof. The second stabilizing agent can be used at any suitable concentration. In some embodiments, the second stabilizing agent has a concentration from 0.1 wt-% to 10 wt-%, *e.g.,* 0.1 wt-%, 0.5 wt-%, 1 wt-%, 2 wt-%, 3 wt-%, 4 wt-%, 5 wt-%, 6 wt-%, 7 wt-%, 8 wt-%, 9 wt-%, or 10 wt-%. In other embodiments, the second stabilizing agent has a concentration from 0.5 wt-% to 5 wt-%, *e.g.,* 0.5 wt-%, 1 wt-%, 1.5 wt-%, 2 wt-%, 2.5 wt-%, 3 wt-%, 3.5 wt-%, 4 wt-%, 4.5 wt-% or 5 wt-%. In still other embodiments, the second stabilizing agent has a concentration from 0.6 wt-% to 1.8 wt-%, *e.g.,* 0.6 wt-%, 0.7 wt-%, 0.8 wt-%, 0.9 wt-%, 1.0 wt-%, 1.1 wt-%, 1.2 wt-%, 1.3 wt-%, 1.4 wt-%, 1.5 wt-%, 1.6 wt-%, 1.7 wt-%, or 1.8 wt-%.

In some embodiments, the first stabilizing agent is a 2,6-pyridinedicarboxylic acid, or a salt thereof, and the second stabilizing agent is HEDP, or a salt thereof.

The compositions used in the method according to the present invention can retain any suitable level or percentage of the C₁-C₂₂ percarboxylic acid activity for any suitable time after the composition is formed. In some embodiments, the present composition retains at least 60%, 65%, 70%, 75%, 80%, 85% or 90% of the initial C₁-C₂₂ percarboxylic acid activity for any suitable time after the composition is formed. In other embodiments, the present composition retains at least 60% of the initial C₁-C₂₂ percarboxylic acid activity for at least 1, 2, 3, 4, 5, 6, 7, 8, 9, 10, 11, 12, 13, 14, 15, 20, 25, 30 minutes, 1, 2, 5, 10, 15, 20 or 24 hours, or longer after the composition is formed.

In some embodiments, the compositions can comprise a peroxidase or a catalase to further reduce the hydrogen peroxide concentration. Any suitable peroxidase or a catalase can be used in the compositions. Exemplary peroxidases and catalases are described in the above Section B. In other embodiments, the compositions can further comprise a substance that aids solubilization of the first and/or second stabilizing agent(s). Exemplary substances that can aid solubilization of the first and/or second stabilizing agent(s) include hydrotropes such as sodium xylene sulfonate, sodium cumene sulfonates, and surfactants, such as anionic surfactants and noinionic surfactants.

The present invention is directed to a method for slick water fracturing, which method comprises directing the above composition into a subterranean environment.

The above compositions can be directed into a subterranean environment at any suitable speed. In some embodiments, the present composition is directed into a subterranean environment at a speed faster than 79 L/min (30 barrel (bbl)/min). In other embodiments, the present composition is directed into a subterranean environment at a speed from 132 L/min (50 bbl/min) to 265 L/min (100 bbl/min), *e*.*g*., 132 (50), 159 (60), 185 (70), 212 (80), 238 (90), or 265 L/min (100 bbl/min).

The compositions can be directed into any suitable subterranean environment. In some embodiments, the subterranean environment comprises a well in a shale gas and/or oil reservoir.

The compositions can be directed into a subterranean environment by any suitable methods. In some embodiments, the composition is pumped down a well-bore.

### D. Gel based compositions and uses thereof

In particular, the present invention relates to gel based compositions used in a method for oil and/or gas drilling that comprise stable percarboxylic acid compositions. In one aspect, the composition comprises:
1) a C₁-C₂₂ carboxylic acid;
2) a C₁-C₂₂ percarboxylic acid;
3) hydrogen peroxide;
4) a first stabilizing agent, which is picolinic acid or a compound having the following Formula (IA): 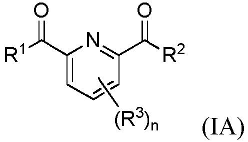 wherein
   R¹ is OH or -NR^{1a}R^{1d}, wherein R^{1a} and R^{1b} are independently hydrogen or (C₁ - C₆)alkyl;
   R² is OH or -NR^{2a}R^{2b}, wherein R^{2a} and R^{2b} are independently hydrogen or (C₁ - C₆)alkyl;
   each R³ is independently (C₁ -C₆)alkyl, (C₂ -C₆)alkenyl or (C₂ -C₆)alkynyl; and n is a number from zero to 3;
   or a salt thereof;
   or a compound having the following Formula (IB): 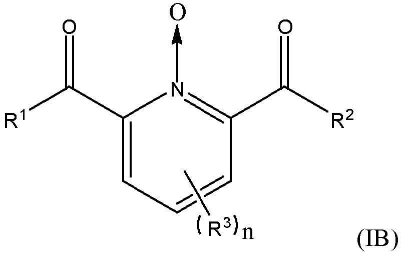
   wherein
   R¹ is OH or -NR^{1a}R^{1d}, wherein R^{1a} and R^{1b} are independently hydrogen or (C₁ - C₆)alkyl;
   R² is OH or -NR^{2a}R^{2b}, wherein R^{2a} and R^{2b} are independently hydrogen or (C₁ - C₆)alkyl;
   each R³ is independently (C₁ -C₆)alkyl, (C₂ -C₆)alkenyl or (C₂ -C₆)alkynyl; and
   n is a number from zero to 3;
   or a salt thereof;
5) a second stabilizing agent, which is a compound having the following Formula (IIA): 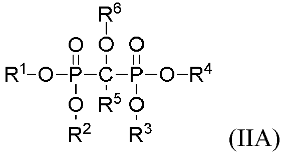 wherein
   R¹, R², R³, and R⁴ are independently hydrogen, (C₁ -C₆)alkyl, (C₂ -C₆)alkenyl or (C₂ -C₆)alkynyl, or C₆-₂₀ aryl;
   R⁵ is (C₁ -C₆)alkyl, (C₂ -C₆)alkenyl or (C₂ -C₆)alkynyl; and
   R⁶ is hydrogen, (C₁ -C₆)alkyl, (C₂ -C₆)alkenyl or (C₂ -C₆)alkynyl;
   or a salt thereof;
   or a compound having the following Formula (IIB): 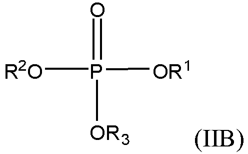
   wherein
   R¹, R², and R³ are independently hydrogen, (C₁ -C₆)alkyl, (C₂ -C₆)alkenyl or (C₂ -C₆)alkynyl, or C₆-₂₀ aryl;
   or a salt thereof;
6) a viscosity enhancer; and
   wherein said hydrogen peroxide has a concentration of 1 ppm to 15 ppm, and said C₁-C₂₂ percarboxylic acid has a concentration of at least 2 times of the concentration of said hydrogen peroxide.

In some embodiments, the composition is an equilibrated composition that comprises peracid, hydrogen peroxide, carboxylic acid and a solvent, *e*.*g*., water. In some embodiments, the present composition does not comprise a mineral acid, *e.g.,* the mineral acids disclosed in WO 91/07375.

The composition used in the method according to the present invention can comprise any suitable level of the hydrogen peroxide. In some embodiments, the hydrogen peroxide in the compositions has a concentration of 1 ppm to 15 ppm, *e.g.,* 1 ppm, 2 ppm, 3 ppm, 4 ppm, 5 ppm, 6 ppm, 7 ppm, 8 ppm, 9 ppm, 10 ppm, 11 ppm, 12 ppm, 13 ppm, 14 ppm, or 15 ppm.

In some embodiments, the C₁-C₂₂ percarboxylic acid has a concentration of at least 6 times of the concentration of the hydrogen peroxide. In other embodiments, the C₁-C₂₂ percarboxylic acid has a concentration of at least 10 times of the concentration of the hydrogen peroxide. In still other embodiments, the C₁-C₂₂ percarboxylic acid has a concentration of at least 2, 3, 4, 5, 6, 7, 8, 9 or 10 times of the concentration of the hydrogen peroxide.

Any suitable viscosity enhancer can be used in the present compositions. In some embodiments, the viscosity enhancer is a conventional linear gel, a borate-crosslinked gel, an organometallic-crosslinked gel or an aluminium phosphate-ester oil gel. Other exemplary viscosity enhancers include the ones described in the above Section B. The viscosity enhancer can be used at any suitable levels. In some embodiments, the viscosity enhancer has a concentration from 0.2 to 12 kg/m³ (2 to 100 units of pounds per thousand gallons), preferably from 0.6 to 7.8 kg/m³ (5 to 65 units of pounds per thousand gallons). In other embodiments, the viscosity enhancer has a concentration at 0.2 (2), 0.4 (3), 0.5 (4), 0.6 (5), 0.7 (6), 0.8 (7), 1.0 (8), 1.1 (9), 1.2 (10), 2.4 (20), 3.6 (30), 4.8 (40), 6.0 (50), 7.2 (60), 8.4 (70), 9.6 (80), 11 (90), or 12 (100) kg/m³ (units of pounds per thousand gallons).

The composition can further comprise any substances suitable for oil and/or gas drilling. In some embodiments, the composition can further comprise a proppant, a surfactant, a scale inhibitor and/or a breaker. Any suitable proppant can be used. In some embodiments, the proppant is a sand or a ceramic bead. Any suitable scale inhibitor can be used. In some embodiments, the scale inhibitor is a polymer, a phosphonate or a phosphate ester. Any suitable breaker can be used. In some embodiments, the breaker is an oxidizer, an enzyme or a pH modifier.

Any suitable C₁-C₂₂ percarboxylic acid can be used in the compositions. In some embodiments, the C₁-C₂₂ percarboxylic acid is a C₂-C₂₀ percarboxylic acid. In other embodiments, the C₁-C₂₂ percarboxylic acid comprises peroxyacetic acid, peroxyoctanoic acid and/or peroxysulfonated oleic acid. Other exemplary C₁-C₂₂ percarboxylic acids are described in the above Section B.

The composition can comprise any suitable level of the C₁-C₂₂ percarboxylic acid and hydrogen peroxide. In some embodiments, the C₁-C₂₂ percarboxylic acid has a concentration that is effective for its anti-microbial function and the hydrogen peroxide has a concentration that will not cause gel failure. In other embodiments, the hydrogen peroxide has a concentration that is 14 ppm or less. In still other embodiments, the C₁-C₂₂ percarboxylic acid has a concentration from 10 ppm to 30 ppm, *e.g.,* 10 ppm, 15 ppm, 20 ppm, 25 ppm, or 30 ppm, and the hydrogen peroxide has a concentration from 1 ppm to 3 ppm, *e.g.,* 1 ppm, 1.5 ppm, 2 ppm, 2.5 ppm, or 3 ppm.

In some embodiments, the first stabilizing agent is picolinic acid, or a salt thereof. In other embodiments, the first stabilizing agent is 2,6-pyridinedicarboxylic acid, or a salt thereof. The first stabilizing agent can be used at any suitable concentration. In some embodiments, the first stabilizing agent has a concentration from 0.005 wt-% to 5 wt-%. In other embodiments, the first stabilizing agent has a concentration from 0.05 wt-% to 0.15 wt-%. In still other embodiments, the first stabilizing agent has a concentration at 0.005 wt-%, 0.01 wt-%, 0.1 wt-%, 1 wt-%,2 wt-%, 3 wt-%, 4 wt-%, or 5 wt-%. In yet other embodiments, the first stabilizing agent has a concentration at 0.05 wt-%, 0.06 wt-%, 0.07 wt-%, 0.08 wt-%, 0.09 wt-%, 0.10 wt-%, 0.11 wt-%, 0.12 wt-%, 0.13 wt-%, 0.14 wt-%, 0.15 wt-%.

In some embodiments, the second stabilizing agent is 1-hydroxy ethylidene-1,1-diphosphonic acid (HEDP), or a salt thereof. The second stabilizing agent can be used at any suitable concentration. In some embodiments, the second stabilizing agent has a concentration from 0.1 wt-% to 10 wt-%, *e.g.,* 0.1 wt-%, 0.5 wt-%, 1 wt-%, 2 wt-%, 3 wt-%, 4 wt-%, 5 wt-%, 6 wt-%, 7 wt-%, 8 wt-%, 9 wt-%, or 10 wt-%. In other embodiments, the second stabilizing agent has a concentration from 0.5 wt-% to about 5 wt-%, *e.g.,* 0.5 wt-%, 1 wt-%, 1.5 wt-%, 2 wt-%, 2.5 wt-%, 3 wt-%, 3.5 wt-%, 4 wt-%, 4.5 wt-% or 5 wt-%. In still other embodiments, the second stabilizing agent has a concentration from 0.6 wt-% to about 1.8 wt-%, *e.g.,* 0.6 wt-%, 0.7 wt-%, 0.8 wt-%, 0.9 wt-%, 1.0 wt-%, 1.1 wt-%, 1.2 wt-%, 1.3 wt-%, 1.4 wt-%, 1.5 wt-%, 1.6 wt-%, 1.7 wt-%, or 1.8 wt-%.

In some embodiments, the first stabilizing agent is a 2,6-pyridinedicarboxylic acid, or a salt thereof, and the second stabilizing agent is HEDP, or a salt thereof.

The compositions can retain any suitable level or percentage of the C₁-C₂₂ percarboxylic acid activity for any suitable time after the composition is formed. In some embodiments, the present composition retains at least 60%, 65%, 70%, 75%, 80%, 85% or 90% of the initial C₁-C₂₂ percarboxylic acid activity for any suitable time after the composition is formed. In other embodiments, the composition retains at least 60% of the initial C₁-C₂₂ percarboxylic acid activity for at least 1, 2, 3, 4, 5, 6, 7, 8, 9, 10, 11, 12, 13, 14, 15, 20, 25, 30 minutes, 1, 2, 5, 10, 15, 20 or 24 hours, or longer after the composition is formed.

In some embodiments, the compositions can comprise a peroxidase or a catalase to further reduce the hydrogen peroxide concentration. Any suitable peroxidase or a catalase can be used in the compositions. Exemplary peroxidases and catalases are described in the above Section B. In other embodiments, the compositions can further comprise a substance that aids solubilization of the first and/or second stabilizing agent(s). Exemplary substances that can aid solubilization of the first and/or second stabilizing agent(s) include hydrotropes such as sodium xylene sulfonate, sodium cumene sulfonates, and surfactants, such as anionic surfactants and noinionic surfactants.

The present invention is directed to a method for high-viscosity fracturing, which method comprises directing the above composition into a subterranean environment.

The methods according to the present invention can be used to direct the above composition into any suitable subterranean environment. In some embodiments, the present methods can be used to direct the above composition into a subterranean environment comprising a well in a gas and/or oil field.

In some embodiments, exemplary compositions used in the method according to the present invention comprise the components set forth in the following Tables 1-3. Prior to or during use, the exemplary compositions can be diluted to a desired level. For example, the exemplary compositions can be diluted by 2, 5, 10, 50, 100, 500, 1,000, 5,000, or 10,000 folds.

**Table 1**

| Vortexx ES with DPA | |
|---|---|
| **Formula (pre-equilibrium)** | |
| Acetic Acid | 59.00% |
| Octanoic Acid | 10.00% |
| Hydrogen Peroxide (35%) | 30.00% |
| DPA (100%) | 0.04% |
| HEDP (60%) | 0.96% |
| Water | 0.00% |
| Total | 100.00% |
| | |

| **Equilibrium Concentrations** | |
|---|---|
| Acetic Acid | 48.54% |
| Peracetic Acid | 13.25% |
| Octanoic Acid | 8.74% |
| Peroctanoic Acid | 1.40% |
| Hydrogen Peroxide | 4.00% |
| DPA (100%) | 0.04% |
| HEDP | 0.58% |
| Water | 23.45% |
| Total | 100.00% |

**Table 2**

| KX-6145 (Inspexx 100) | |
|---|---|
| **Formula (pre-equilibrium)** | |
| Acetic Acid | 55.00% |
| Octanoic Acid | 4.00% |
| Hydrogen Peroxide (35%) | 30.00% |
| DPA (100%) | 0.04% |
| HEDP (60%) | 1.00% |
| Water | 9.96% |
| Total | 100.00% |
| | |

| **Equilibrium Concentrations** | |
|---|---|
| Acetic Acid | 45.53% |
| Peracetic Acid | 12.00% |
| Octanoic Acid | 3.28% |
| Peroctanoic Acid | 0.80% |
| Hydrogen Peroxide | 6.20% |
| DPA | 0.04% |
| HEDP | 0.60% |
| Water | 31.55% |
| Total | 100.00% |

**Table 3**

| Tsunami 200 (Falcon 15AO) | |
|---|---|
| **Formula (pre-equilibrium)** | |
| Acetic Acid | 53.96% |
| Octanoic Acid | 15.00% |
| Hydrogen Peroxide (35%) | 30.00% |
| DPA (100%) | 0.04% |
| HEDP (60%) | 1.00% |
| Water | 0.00% |
| Total | 100.00% |
| | |

| **Equilibrium Concentrations** | |
|---|---|
| Acetic Acid | 43.93 |
| Peracetic Acid | 12.75% |
| Octanoic Acid | 12.75% |
| Peroctanoic Acid | 2.50% |
| Hydrogen Peroxide | 4.25% |
| DPA | 0.04% |
| HEDP | 0.60% |
| Water | 23.18% |
| Total | 100.00% |

### G. Examples

The following examples are included for illustrative purposes only and are not intended to limit the scope of the invention.

### Example 1. Stability Comparison of Peracetic Acid Compositions with Various Stabilizers

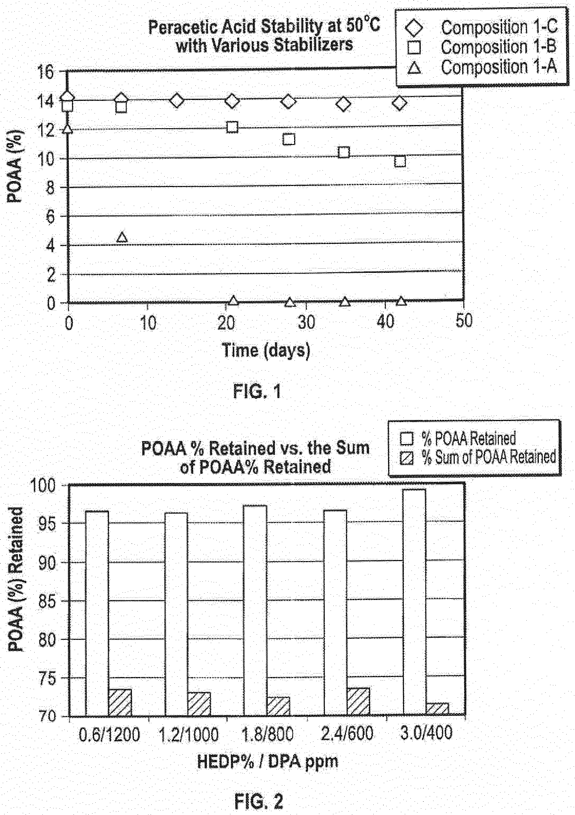

Peracetic acid (POAA) compositions with various stabilizers as described in Table 1were made, and on reaching equilibrium, the compositions were stored in 50°C oven. The level of peracetic acid and hydrogen peroxide were monitored by an iodometric titration method. The results are summarized in Table 4 and Figure 1.

**Table 4. Peracetic acid compositions with various stabilizers**

| Component | Composition I-A | Composition I-B | Composition I-C |
|---|---|---|---|
| Acetic acid | 83.0% | 83.9% | 82.9% |
| H2O2 (50%) | 16.0% | 16.0% | 16.0% |
| HEDP (60%) | 1.0% | 0.0% | 1.0% |
| Dipicolinic acid (DPA) | 0.0% | 0.1% | 0.1% |
| Total | 100.0% | 100.0% | 100.0% |
| | | | |
| POAA (after equilibrium) | 12.12% | 13.55% | 14.37% |
| H2O2 (after equilibrium) | 1.09% | 1.65% | 1.26% |

As can be seen in Table 4, after reaching equilibrium, the level of peracetic acid formed among compositions are in the order of I-C > I-B > I-A. While not wishing to be bound by any particular theories, it is thought that this difference in level of peracetic acid formed is due to the different efficiency of the stabilizers in the compositions. Once formed, peracetic acid starts to decompose, and the stabilizer in the composition will have a direct impact on the decomposition rate of the peracetic acid. Thus, the more efficient the stabilizer, the less decomposition will occur in the compositions, and more peracetic acid will be formed upon reaching equilibrium. This is important not only in maintaining the shelf life of a peracetic acid composition, but it is also economically beneficial to be able to form higher levels of peracetic acid in compositions from the same level of starting materials (e.g., acetic acid, and hydrogen peroxide).

**Table 5. Stability of Peracetic Acid Compositions with Various Stabilizers**

| **Time (day)** | **Composition I-A** | | **Composition I-B** | | **Composition I-C** | |
|---|---|---|---|---|---|---|
| | POAA% | H₂O₂% | POAA% | H₂O₂% | POAA% | H₂O₂% |
| 0 | 12.12 | 1.09 | 13.55 | 1.65 | 14.37 | 1.26 |
| 7 | 4.84 | 0.36 | 13.43 | 1.20 | 14.18 | 1.33 |
| 14 | na | na | na | na | 14.11 | 1.26 |
| 21 | 0.13 | 0.0 | 11.93 | 1.06 | 14.00 | 1.30 |
| 28 | 0.0 | 0.0 | 10.97 | 1.01 | 13.95 | 1.25 |
| 35 | 0.0 | 0.0 | 10.23 | 0.88 | 13.74 | 1.28 |
| 42 | 0.0 | 0.0 | 9.44 | 0.90 | 13.65 | 1.23 |

As can be seen from Table 5 and Figure 1, a synergistic stabilization effect was observed when a combination of HEDP and DPA was used in the peracetic acid formulations. Surprisingly, it was found that for the high ratio peracetic acid to hydrogen peroxide compositions tested, the most commonly used stabilizer, i.e., HEDP, had only marginal effects on the stabilization of the peracetic acid. For example, as shown in Table 2, composition I-A lost more than 60% of the peracetic acid formed after only 1 week under the test conditions. Composition I-B, which used only DPA as a stabilizer, had an improved stabilization effect compared to composition I-A, and lost 20% peracetic acid in four weeks under the tested conditions. In contrast, the combination of DPA and HEDP proved to be excellent stabilizer for the high ratio peracetic acid to hydrogen peroxide compositions tested. As shown in Table 2, Composition I-C, which had a combination of HEDP and DPA as stabilizers, lost less than 5% peracetic acid in 4 weeks under the same test conditions. The stability effect of the combination of HEDP and DPA is more than the sum of the individual stability effect of HEDP and DPA. This result demonstrates that the stability effect of the combination of HEDP and DPA is a synergistic stabilization effect, and not a merely additive effect of the individual stability effect of HEDP and DPA.

### Example 2. Synergistic Stabilization Study of HEDP and DPA in High Ratio Peracetic Acid to Hydrogen Peroxide (POAA/H₂O₂) Compositions

To systematically study the synergistic stabilization performance of HEDP and DPA, high ratio POAA/H₂O₂ peracetic acid compositions with various stabilizers are made as described in Table 6. The compositions, once equilibrium was reached, were stored in a 50°C oven, and the level of peracetic acid and hydrogen peroxide were monitored by an iodometric titration method. The results are summarized in Table 7.

**Table 6. Peracetic Acid Compositions with Various Stabilizers**

| **Component** | **IIA-1** | **IIA-2** | **IIA-3** | **IIA-4** | **IIA-5** | |
|---|---|---|---|---|---|---|
| Acetic acid | 83.0% | 82.0% | 83.0% | 83.0% | 79.0% | |
| H2O2 (50%) | 16.01% | 16.01% | 16.01% | 16.01% | 16.02% | |
| HEDP (60%) | 1.00% | 2.00% | 3.01% | 4.02% | 5.00% | |
| DPA | 0.00% | 0.00% | 0.00% | 0.00% | 0.00% | |
| Total | 100% | 100% | 100% | 100% | 100% | |
| POAA% (equilibrium) | 11.60 | 11.63 | 11.68 | 11.88 | 11.80 | |
| H2O2 (equilibrium) | 0.84 | 0.91 | 0.95 | 0.95 | 1.03 | |
| | | | | | | |

| **Component** | **IIB-1** | **IIB-2** | **IIB-3** | **IIB-4** | **IIB-5** | |
|---|---|---|---|---|---|---|
| Acetic acid | 83.88% | 83.93% | 83.93% | 83.94% | 83.96% | |
| H2O2 (50%) | 16.02% | 16.00% | 16.02% | 16.02% | 16.00% | |
| HEDP (60%) | 0.00% | 0.00% | 0.00% | 0.00% | 0.00% | |
| DPA | 0.12% | 0.10% | 0.08% | 0.06% | 0.04% | |
| Total | 100% | 100% | 100% | 100% | 100% | |
| POAA% (equilibrium) | 13.90 | 14.01 | 13.97 | 14.15 | 14.05 | |
| H2O2 (equilibrium) | 1.15 | 1.21 | 1.29 | 1.28 | 1.20 | |
| | | | | | | |

| **Component** | **IIC-1** | **IIC-2** | **IIC-3** | **IIC-4** | **IIC-5** | **IIC-6** |
|---|---|---|---|---|---|---|
| Acetic acid | 84.03% | 82.90% | 81.90% | 80.92% | 79.95% | 78.97 % |
| H2O2 (50%) | 16.02% | 16.00% | 16.04% | 16.02% | 16.01% | 16.01 % |
| HEDP (60%) | 0.00% | 1.00% | 2.01% | 3.01% | 4.01% | 5.00 % |
| DPA | 0.00% | 0.12% | 0.10% | 0.08% | 0.06% | 0.04 % |
| Total | 100% | 100% | 100% | 100% | 100% | 100% |
| POAA% (equilibrium) | 11.42 | 14.51 | 14.39 | 14.30 | 14.18 | 13.43 |
| H2O2 (equilibrium) | 0.82 | 1.20 | 1.16 | 1.17 | 1.23 | 1.22 |

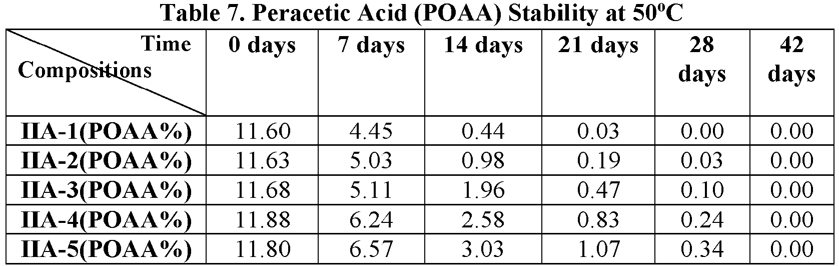

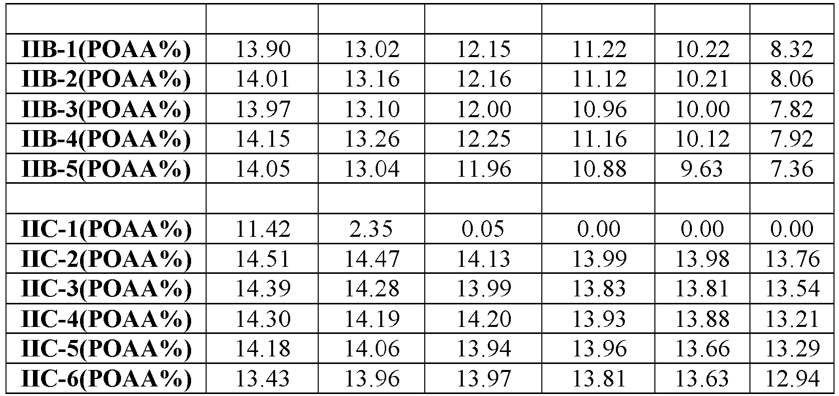

The results shown in Table 7 clearly indicate that when a single stabilizer is used, simply increasing the levels of stabilizer in the composition will not proportionally increase the stability of the peracetic aid. For example, for composition series IIA, increasing HEDP from 1 to 5% resulted in only a marginal increase of stability. For composition series IIB, increasing the level of DPA beyond 0.06% had virtually no impact on the stability. Without wishing to be bound by any particular theory, it is thought that stabilizers in peracid compositions stabilize peracids through the chelating of the trace transitional metal ions in the compositions. Thus, the efficacy of a stabilizer is mainly dependent on its binding constant (Ksp) with the individual ion. Therefore, it is thought that increasing the concentration of a single stabilizer has a very limited effect on the binding capability of that stabilizer.

While not wishing to be bound by any particular theory, on one hand it is thought that the combination of two stabilizers, such as HEDP and DPA may form mixed ligand complexes with transition metals with an increased binding constant (Ksp) compared with that of the individual ligand metal complex formed when a single stabilizer is used. This mixed ligand complex is thought to lead to the significant increase in stabilizing effect seen when using a combination of stabilizers. On the other hand, DPA and the related niacin compounds are known hydroxyl radical scavengers (see for example: Biosci. Biotechnol. Biochem., 2002, 66(3), 641-645.)*,* and by quenching the hydroxyl radicals formed and thus preventing the subsequent chain decomposition reaction involving the peracid species, the stability of the corresponding peracid composition will be further improved.

Figure 2 further illustrates the synergistic stabilizing capability of HEDP and DPA. The percent of POAA retained at the end of 28 days (compared to 0 days) at 50°C of composition IIC series, which had a mixture of HEDP and DPA, was compared with the sum of percent of POAA retained from the composition IIA (HEDP only as a stabilizer) and IIB series (DPA only as a stabilizer). For example, composition IIC-2, which contains 1.2% HEDP and 1,200ppm DPA stabilizers, retained 96% POAA; in contrast, composition IIA-2 which contains 1.2% HEDP as single stabilizer, retained 0.26% POAA; and composition IIB-1 which contains 1,200ppm DPA as single stabilizer, retained 73.5% POAA. Combined, compositions IIA-2 and IIB-1 have the same stabilizer as IIC-2, but the sum of POAA retained from IIA-2 and IIB-1 is only 73.8%, much less than that of IIC-2. While not wishing to be bound by any particular theories, the combination of two different types of ligands, such as HEDP and DPA, may form mixed ligand complexes with the transition metals that catalytically decompose peracids, and the mixed ligand complexes formed have dramatically increased binding constant (Ksp) comparing with that of the individual ligand metal complex. The increased transition metal binding efficiency by the mixture of HEDP and DPA thus contributed to the synergistic stabilization capability of peracids.

### Example 3. Self-Accelerating Decomposition Testing of Low Hydrogen Peroxide Peroxyacetic Acid Chemistries

The following SADT procedure is a standardized United Nations protocol to help determine the hazard classes of self-heating substances known as the "H4 method" (sect. 28.4.4, p. 314, UN "Recommendations on the Transport of Dangerous Goods, Manual of Tests and Criteria", 5^{th} revised edition (2009).) The method is specific to the type of packaging used, and if the SADT temperature is found to be 45 degrees C or lower, the product must be shipped, stored and used with rigorous refrigerated controls. Such temperature controlled requirements make it impractical to ship, and store the products. The self-heating behavior of chemistries in very large package sizes can be simulated in Dewar flasks which have previously been tested to determine that they closely reflect the heat transfer properties of the packaging to be used with the chemicals. Bulk tanks are the largest potential package sizes and to model their heat transfer properties it is recommended to use spherical Dewar flasks. The UN committee for transport of Dangerous Goods further builds a safety margin into the 1136 L (300 gallon) and larger package sizes by requiring that they have SADT's ≥50 deg C. As per UN-H4 guidelines 28.4.1.4.1, if the temperature of the contents within the flasks does not exceed the oven temperature by greater than 6 degrees C within 7 days, the SADT by definition is greater than the oven temperature. The guidelines further define the zero time as when the sample temperature is within 2 degrees of the oven temperature and require an 80% filled Dewar fitted with temperature monitoring and vented closures.

For this experiment, the above test conditions were used, and three spherical Dewar flasks were filled to 80% of full with chemistries I-A, I-B, and IC (*See* Table 8).

**Table 8**

| **Component** | **Formula I-A** | **Formula I-B** | **Formula I-C** |
|---|---|---|---|
| **Acetic acid** | 83.00 | 83.96 | 82.96 |
| **Hydrogen peroxide (50%)** | 16.00 | 16.00 | 16.00 |
| **Dequest 2010 (60% HEDP)** | 1.00 | 0.00 | 1.00 |
| **Dipicolinic acid (DPA)** | 0.00 | 0.10 | 0.10 |
| | | | |
| **Total** | 100.00 | 100.00 | 100.00 |

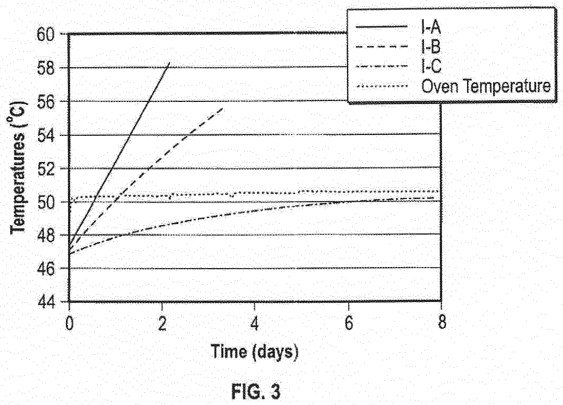

As can be seen in Figure 3, chemistry I-A and I-B containing respectively HEDP only, and DPA only, as stabilizers exceeded the 6 degree exotherm limit within 1.5 days and 3 days respectively. The same concentrations of HEDP and DPA when mixed however produced such an increased stabilization such that the self-heating effects were not sufficient to reach the oven temperature within the 7 day period. Thus, this combination of stabilizers used with this peracid composition would allow for the bulk storage and transport of the peracid composition without refrigeration.

The above examples are included for illustrative purposes only and are not intended to limit the scope of the invention. Many variations to those described above are possible.

### Example 4. Use Solution Peracetic Acid (POAA) Stability Comparison

The use solution stability is a very important factor in evaluating the performance of a biocide, especially for water treatment application. It is preferred that the biocide is stable during the time period of treatment, as less biocide will be needed for the application and thus are economically and environmentally beneficial. Peroxycarboxylic acids are less susceptible to decomposition than most oxidative biocides, such as halogen based biocides. However, as strong oxidation agents, the stability of peroxycarboxylic acids in use solution are strongly dependent on the water conditions, such as contaminants and pH of the water. This is especially apparent in the case of impure ground waters related to oil or gas fracking operations. In order to conserve the water used on fracking sites, the water is partially recovered and recycled at each site. While it is uncertain what component of the used fracking water might be responsible for quenching the peracetic acid, it is a critical shortcoming for commercial peracetic acid as it greatly affects the cost and antimicrobial ability of this preferred biocide. This experiment is designed to assess the use solution stability of various peracetic acid compositions in water which contains the reused water from oil and gas fracking applications.

The water used in this test contains 20% (volume) of used water from two oil and gas well fracking sites respectively, and 80%(volume) fresh water. The peracetic acid compositions tested includes a commercial peracetic acid composition (around 15% POAA, 10% H₂O₂) currently used as a biocide for oil and gas well water treatment; the stable, high POAA to H₂O₂ ratio peracetic acid composition disclosed in this application (composition I-C as shown in Table 1), and a peracetic acid composition generated by adding a catalase enzyme (100 ppm) to the diluted commercial peracid composition (1% POAA) to eliminate H₂O₂ to non-detectable level prior to the test. The initial POAA levels are targeted at 30 ppm, and the concentration of POAA was monitored by iodometric titration method during the intended application time of 15 minutes. The results are summarized in Table 9 below.

**Table 9. POAA Stability of Various Peroxyacetic Acid Compositions in Use Solution Containing Used Water from Oil and Gas Well**

| **Peracid Composition** | **Water** | **POAA (ppm)** | | | |
|---|---|---|---|---|---|
| | | **0 min.** | **5 min.** | **10 min.** | **15 min.** |
| Commercial POAA Product | Well Site A Blend | 30 | 1.3 | 0 | 0 |
| Catalase Pretreated POAA Product | Well Site A Blend | 30 | 29 | 26 | 26 |
| POAA Composition I-C | Well Site A Blend | 30 | 21 | 22 | 22 |
| | | | | | |
| Commercial POAA Product | Well Site B Blend | 30 | 0 | 0 | 0 |
| Catalase Pretreated POAA Product | Well Site B Blend | 30 | 24 | 22 | 21 |
| POAA Composition I-C | Well Site B Blend | 30 | 21 | 18 | 16 |

As shown in Table 9, it is surprisingly found that the presence of H₂O₂ in the peracetic acid composition has significantly negative impact on the POAA stability. For example, the commercial peracid product which contains around 15% POAA and 10% H₂O₂, lost almost all of its peracid content within 5 minutes whereas a hydrogen peroxide depleted version of the same (pretreated with catalase enzyme) lost only 3% of its initial activity in 10 minutes and only 12% in 15 minutes. For composition I-C, which contains around 15% peracetic acid but only 1% hydrogen peroxide, lost only 30% POAA in 15 min. This makes the composition I-C particularly useful in fracking water treatment application compared with the commercial peracetic acid compositions, as significantly less amount of POAA was needed for the treatment. The phenomena observed seems to be universal as two different water blend from different well sites have the similar results as shown in Table 6. While not wishing to be bound by any particular theory, the results observed may be explained by the presence of the commonly found sulfur related contaminants in the used well water, which in the presence of H₂O₂, will generate radical specie, and these very reactive radical species will then react with POAA to decompose it.

### Example 5. Gelling Test of Peracetic Acid (POAA) Compositions with Various Levels of Hydrogen Peroxide

Hydrogen peroxide is a known gel breaker in oil and gas gel fracking application. It is expected that H₂O₂ presented in a peracid composition will have negative impacts on the gel property. This experiment was designed to assess the levels of H₂O₂ in peracid compositions and their impacts on the gel property.

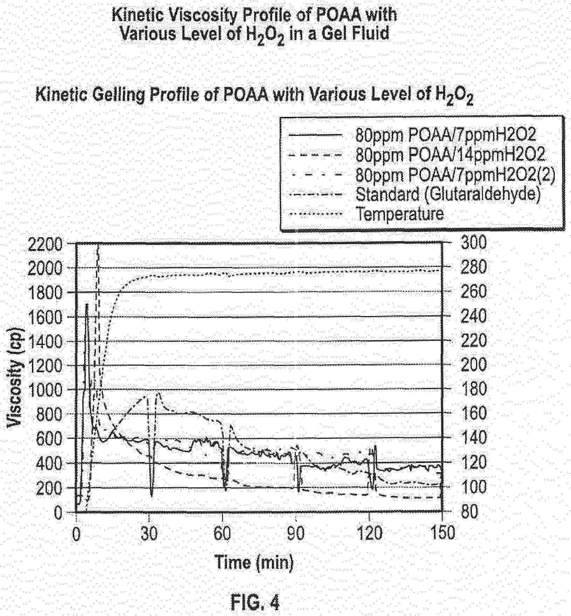

The H₂O₂ free peracetic acid was first prepared by treating a commercial peracetic acid product (15% POAA, 10% H₂O₂) with catalase, and after the treatment, the catalase was confirmed to be inactivated. Then known amount of H₂O₂ was added to the peracetic acid composition for the test. To ~500g of water was added a guar based gel additives except the cross linker. The mixture was mixed by a blender for ~ 10 min., then POAA prepared as described and H₂O₂ was added to the mixture, and the pH of the mixture was then adjusted to 11.5 with KOH/K₂CO₃ (11.5wt%/22.5%), immediately followed by the addition of the cross linker. The kinetic viscosity of the mixture was then monitored by a viscometer (Kindler) at 275 K during a time period of 2.5 hr. The success criteria is that the viscosity of the mixture maintains 200 cp or higher at the end of the test. For comparison, a gel mixture with the standard glutaraldehyde as the alternative biocide was also tested. The test results are shown in Figure 4.

Figure 4 clearly shows that under the investigated conditions, at the upper use level of POAA (80ppm) as a biocide in oil and gas fracking applications, the presence of 7ppm of H₂O₂ has no impact on the gel property comparing with the standard control (glutaraldehyde), while the presence of 14ppm H₂O₂ cause the Gel failure.

### Example 6. Gelling Test of A High POAA to H₂O₂ Ratio Peracetic Acid Composition

The gelling experiment as described in Example 5 was carried out using different levels of a high POAA to H₂O₂ ratio of peracetic acid composition (I-C) as disclosed in this application. The results are summarized in Table 10, along with the results of a commercial peracetic acid product.

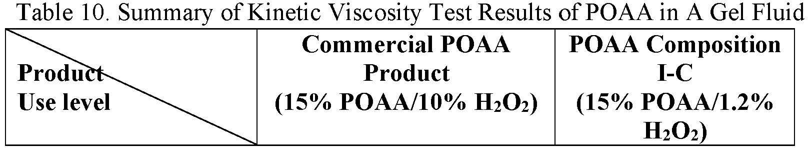

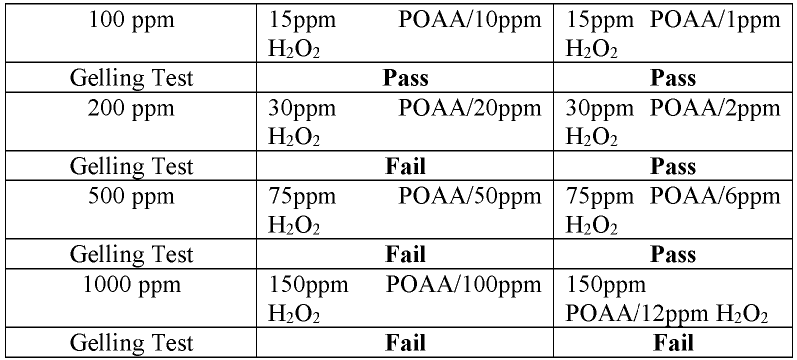

The results from Table 10 show the significant advantages of compositions I-C in gel fracking applications compared with the common peracetic acid compositions. For example, at the POAA levels (30ppm) required for the microorganism kill, the common peracetic acid composition will fail the gel properties of the fluid owing to the high level of H₂O₂ coexisted. In contrast, the high POAA to H₂O₂ ratio peracetic acid composition I-C has no impact of the gel properties even used at a much higher level, *e.g.,* 75ppm POAA.

### Example 7. Enthalpy Part I - Potential Enthalpy of High and Low Hydrogen Peroxide Peroxyacid Products

Peroxyacids and hydrogen peroxide are characterized by a relatively weak O-O bond which typically and especially in the case of peroxyacids is prone to homolytic fission which ultimately produces molecular oxygen, water and the parent carboxylic acids. The property of labile homolytic fission is essential to peroxyacids' utility in bleaching, polymerization and antimicrobial applications but it also can create unwelcome hazardous chemical reactions. The eventual liberation of oxygen is a highly exothermic process (heat producing) and since oxygen is a powerful oxidizing agent, downstream oxidation of organic residues are possible outcomes producing still greater amounts of heat and gas. The worst case scenario is a violent explosion and or eruption of corrosive materials.

For these above reasons peroxyacids fall under the UN category of dangerous goods and as such it is recommended by the UN that they be thoroughly characterized before determining what restrictions should be imposed for shipping, handling and storage of the same. In general these guidelines are followed strictly by local authorities and therefore a restriction requiring refrigerated handling and storage for example would likely limit sales to only a small minority of potential customers. To avoid such restrictions, most peroxyacid producers first formulate their products to be intrinsically stable and then add stabilizers such as HEDP to increase assurance against runaway exothermic decay as well as insuring sufficient shelf-life for efficacy. The unfortunate outcome is that the higher hydrogen peroxide concentrations required for achieving intrinsic stability increase the potential enthalpy and increase the violence of a runaway chemical reaction.

As shown in Table 11, formulae III-A, III-B, and III-C possess approximately twice the potential enthalpy as do formulae I-A, I-B and I-C and yet both deliver 15% peroxyacetic acid. And while the reduction in hydrogen peroxide improves the enthalpic potential for the I-type formula, only in the I-C case does the product possess sufficient shelf stability to allow manufacturing, warehousing and usage before they have lost excessive portions of their initial peroxyacetic acid.

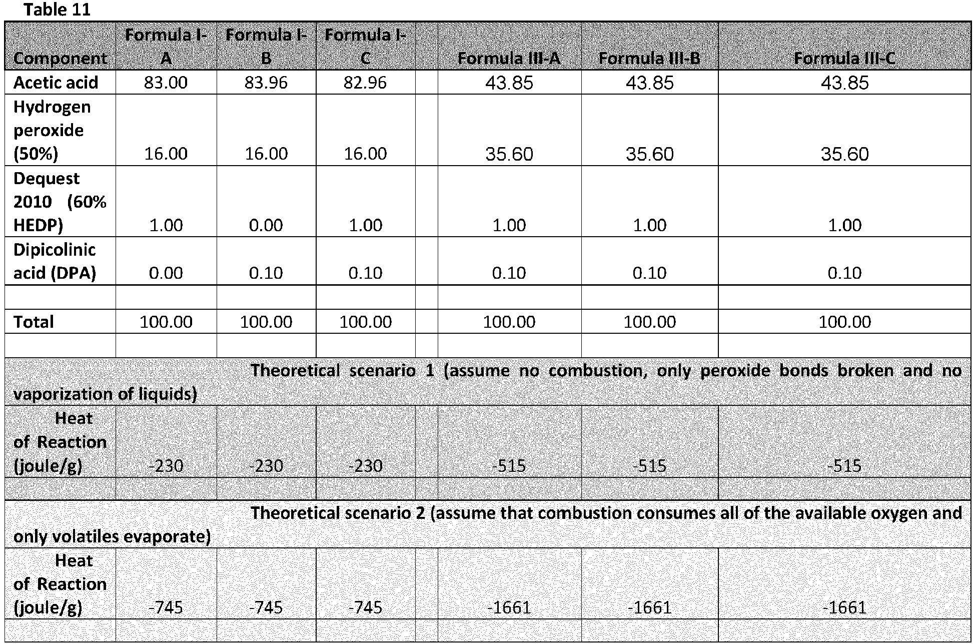

Since the O-O bond is intrinsically weak, metal contaminants such as the ubiquitous ferric and ferrous ions (iron), catalyze O-O bond fission and thus require that peroxyacids be formulated to include stabilizers such as metal chelators. And while the typical chelator usually is sufficient to stabilize formulations made with relatively pure chemicals they cannot practically be high enough to overcome gross contamination events. In fact, accidental contamination of peroxyacid products is not an unknown event and has caused fatal explosions involving peroxides on many occasions. Given that the metal chelator stabilizers added for shipping handling and storage can be overwhelmed by a gross contamination event it is desirable to minimize the potential energy relative to the peroxyacid content of the product. This is especially the case when considering bulk storage scenarios involving for example several thousand gallons of product.

Currently there are several provisions made for contamination accidents, one is the formulated metal chelating agent always present, the other is gas venting arrangements plumbed into bulk tanks as well as water coolant kept on standby. Again, in the case of formulae IA and IB while they halve the potential enthalpy of a typical 15% POAA product their very low hydrogen peroxide levels severely compromise their shelf-stability. In fact, the stability is so poor for IA and IB that 100% decomposition occurs within 1-2 weeks when stored at 40C for <1 week. In example I-C, however, the unique synergistic stabilizer combination is very successful at providing sufficient shelf-life. The synergistic stabilizer combination found in I-C allows 15% peroxyacetic acid formula with a greatly reduced hydrogen peroxide and thus a reduced potential heat of reaction upon a runaway of 230 joules/g (non-combustion scenario) or 745 joules/g if the combustion scenario predominates. In contrast the more traditional peroxyacid product represented by III-A through III-C possesses a potential enthalpy of -515 joules/g (the non-combustion scenario) to -1661 joules/g if the combustion scenario predominates.

### Example 8. Enthalpy Part II - Self-Accelerating Decomposition Testing of Low Hydrogen Peroxide Peroxyacetic Acid Chemistries

The following SADT procedure is a standardized United Nations protocol to help determine the hazard classes of self-heating substances known as the "H4 method." The method is package specific and if the SADT temperature is found to be 45 degrees C or lower the product must be shipped, stored and used with rigorous refrigerated controls. Such controlling requirements would likely render a product to be impractical for commerce as well as dangerous and unwelcome in most facilities.

In the interest of safety the self-heating behavior of chemistries in very large package sizes is simulated in Dewar flasks which have previously been tested to determine that they closely reflect the heat transfer properties of the package. Bulk tanks are the largest potential package sizes and to model their heat transfer properties it is recommended to use spherical Dewar flasks. The UN committee for transport of Dangerous Goods further builds a safety margin into the 1135 L (300 gallon) and larger package sizes by requiring that they have SADT's ≥50 deg C. As per UN-H4 guidelines 28.4.1.4.1 if the temperature of the content does not exceed the oven temperature by greater than 6 degrees C within 7 days, the SADT by definition is greater than the oven temperature. The guidelines further define the zero time as when the sample temperature is within 2 degrees of the oven temperature and they require an 80% filled Dewar fitted with temperature monitoring and vented closures. These criteria were fulfilled as 3 spherical Dewar flasks were filled to 80% of full with chemistries I-A, I-B and I-C (*see* Table 12 below).

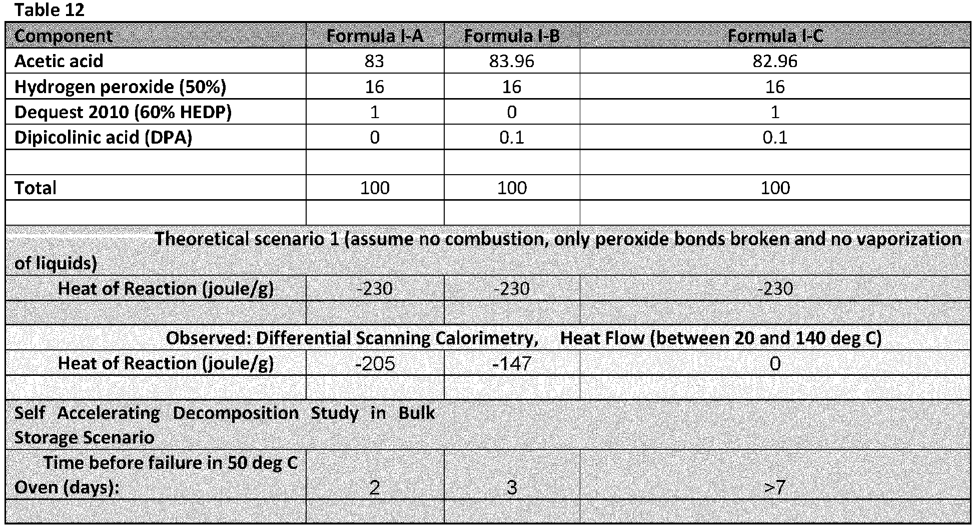

As can be seen in Figure 3, formulae I-A and I-B containing respectively HEDP only and DPA only stabilizers exceeded the 6 degree exotherm limit within 1.5 days and 3 days respectively. The same concentrations of HEDP and DPA when mixed however produced such an extreme stabilization that the self-heating effects were not sufficient to reach the oven temperature within the 7 day period. On the basis of the H4 protocol it appears that this synergistic combination uniquely earns the allowance of bulk storage and transport without refrigeration, at least for this exemplary type of percarboxylic acid and hydrogen peroxide compositions (e.g., formula I-C type of formula).

### Example 9. Quantitation of Peroxide Gases of Decomposition

The volume of peroxides' gases of decomposition was measured using a water filled U-tube fitted with a minimal volume tubing connected to a non-coring syringe needle. The manometer made of pyrex glass was filled partially with deionized water colored with FD&C blue dye #1 and 1,000ppm of non-ionic surfactant. The dye allows for increased visibility of the water columns and the surfactant lowers the surface tension allowing for unbroken water columns. The manometer was also fitted with a metric ruler to allow the convenient determination of the column heights difference. Given that 1 atmosphere of pressure corresponds with 1,006 cm of water column height and the limit of resolution on the column and ruler combination is 1mm, the signal/noise ratio approximates 10:1.

Procedure. Four head space vials were double rinsed with the sample solution before adding 5mL of sample solution (via Repeat Pipettor) and sealing the vials with a silicone backed PTFE septum with aluminum cap. Immediately after sealing the vials the temperature and barometric pressure were recorded. A set of water blank replicates of the same volume were also included. The sealed vials were stored for 24-48 hours at ambient temperatures inside a dark cabinet to allow for optimal gas pressure generation.

Calculations. By calibration of the U-tube water column displacement using a precision gas syringe, the water column height to gas volume ratio was calculated. Using the assumption of peroxide decay to molecular oxygen (ignoring CO2 or CO gases etc.), these values were converted to gas volumes and the loss of available oxygen in the sample was thereby calculated using the formulae below:

2moles of RCO₃H → 2 moles of RCO₂H + 1 mole of O₂ (22.4 L of O₂ at standard temperature and pressure)

And

2moles of H₂O2 → 2 moles of H₂O + 1 mole of O₂ (22.4 L of O₂ at standard temperature and pressure)

As shown in Table 13 below, the synergistic combination of DPA and HEDP reduced the "Rel. Loss" rate of O₂ for I-C to 1/9 that of I-A and better than 1/3^{rd} of that of I-B as measured by the gas volumes of decay. In addition it can be seen that the synergistic combination brings it essentially equal to the rate of loss of the more typical commercial peracids as well as that of a 50% active hydrogen peroxide raw material.

**Table 13**

| | **Active** | **Active** | | | **Net** | **Net** | **Initial** | **Initial** | **Initial** | **Rel. Loss** |
|---|---|---|---|---|---|---|---|---|---|---|
| **Chemistry** | **DPA Conc.** | **HEDP Conc.** | **Init. Ht.** | **Fin. Ht.** | **Gas Gen.** | **O₂ Lost** | **POAA** | **H₂O₂** | **O₂** | **O₂** |
| | (ppm) | (ppm) | (mm) | (mm) | (mL) | (g) | **(w/w, %)** | **(w/w, %)** | **(w/w, %)** | **(w/w, %)** |
| **I-A** | 0 | 6000 | 145 | 415 | 25.0 | 0.036 | 11.48 | 1.00 | 2.89 | 0.27% |
| **I-B** | 1000 | 0 | 145 | 266 | 10.8 | 0.015 | 13.03 | 1.14 | 3.28 | 0.10% |
| **I-C** | 1000 | 6000 | 143 | 181 | 3.0 | 0.004 | 14.16 | 1.27 | 3.58 | 0.03% |
| **D:** Commercial Peracid 15% PAA / 10% Hydrogen peroxide | 0 | 9000 | 143 | 227 | 7.4 | 0.011 | 14.60 | 10.60 | 8.06 | 0.03% |
| **E:** Commercial Peracid 5% PAA / 27% Hydrogen peroxide | 0 | 9600 | 143 | 238 | 8.4 | 0.012 | 5.10 | 27.00 | 13.78 | 0.02% |
| **F:** Hydrogen peroxide, 50% active | 0 | 0 | 143 | 275 | 11.9 | 0.017 | 0.00 | 50.00 | 23.53 | 0.02% |

### Example 10. Hydrogen Sulfide Reduction

Several test were conducted using exemplary formulations of the present invention to reduce hydrogen sulfide (H₂S) spiked in distilled water. The ingredients of the exemplary formulations (13523-37-1 and 123523-37-2) and a control formulation (Tsunami 100 (EC6734A)) are listed in the following Table 14.

**Table 14**

| | 13523-37-1 | 13523-37-1 | 123523-37-2 | 123523-37-2 | EC6734 A | EC673 4A |
|---|---|---|---|---|---|---|
| Composi tion | Wt(g) | % | Wt(g) | % | Wt(g) | % |
| Acetic acid | 719 | 71.9 | 769 | 76.9 | 438.5 | 43.85 |
| H₂O₂ (50%) | 270 | 27 | 220 | 22 | 0 | 0 |
| H₂O₂ (35%) | 0 | 0 | 0 | 0 | 508.5 | 50.85 |
| Dequest 2010 (60%) | 10 | 1 | 10 | 1 | 15 | 1.5 |
| DPA | 1 | 0.1 | 1 | 0.1 | 0 | 0 |
| DI Water | 0 | 0 | 0 | 0 | 38 | 3.8 |
| | | | | | | |
| Total | 1,000 | 100 | 1,000 | 100 | 1,000 | 100 |
| | | | | | | |
| *POAA % | 22.3 | | 17.34 | | 14.46 | |
| H₂O₂ % | 3.78 | | 2.20 | | 10.65 | |
| POAA/ H₂O₂ | 5.90 | | 7.88 | | 1.36 | |

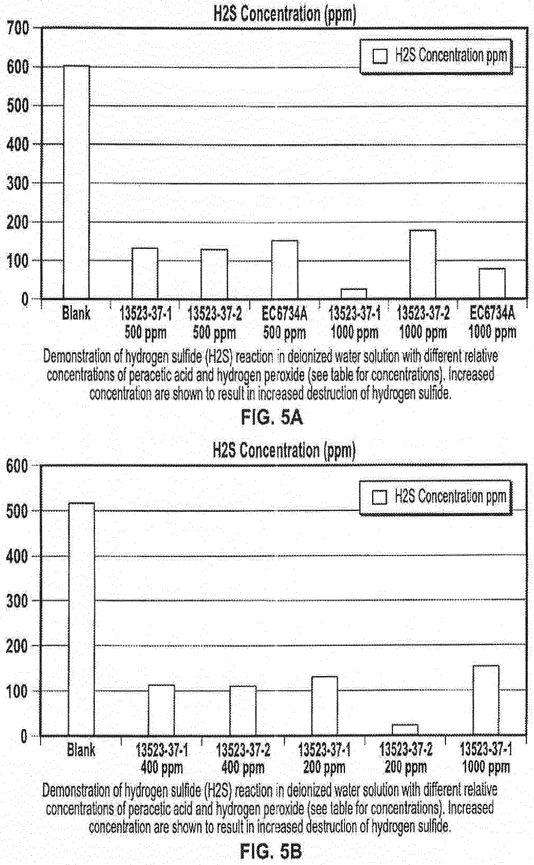

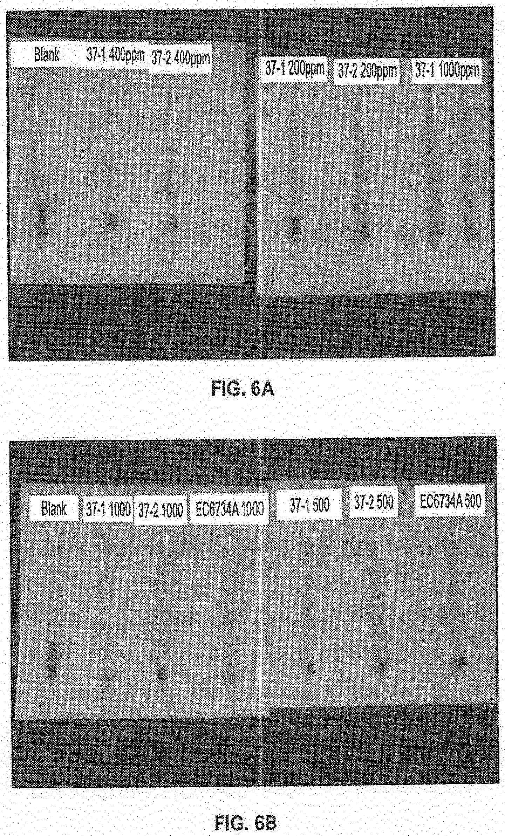

The test results are shown in the following Table 15, and in Figure 5A, 5B, 6A and 6B. As shown in Table 15, formulation 13523-37-1 at 1,000 ppm reduced H₂S 95%, while formulation 13523-37-1 at 500 ppm reduced H₂S 80%. Interestingly, a low dosage seems to reduce the H₂S to close to 50%. When formulation 13523-37-2 was used at 1,000 ppm, H₂S level was reduced to 175 ppm. When formulation 13523-37-2 was used at 500 pm, H₂S level was reduced to 125 ppm. Figure 5a shows an example of hydrogen sulfide (H₂S) reaction in deionized water solution with different relative concentrations of peracetic acid and hydrogen peroxide (*see* Table 15 for concentrations). Increased concentrations are shown to result in increased destruction of hydrogen sulfide. Figure 5b shows another example of hydrogen sulfide (H₂S) reaction in deionized water solution with different relative concentrations of peracetic acid and hydrogen peroxide (*see* Table 15 for concentrations). Increased concentrations are shown to result in increased destruction of hydrogen sulfide.

**Table 15**

| Lease Name & Number | Sample Description | H₂S Concentration (ppm) |
|---|---|---|
| | | |
| d H₂O spiked with H₂S | Blank | 525 |
| d H₂O spiked with H₂S | 13523-37-1 400 ppm | 150 |
| d H₂O spiked with H₂S | 123523-37-2 400 ppm | 190 |
| d H₂O spiked with H₂S | 13523-37-1 200 ppm | 285 |
| d H₂O spiked with H₂S | 123523-37-2 200 ppm | 285 |
| d H₂O spiked with H₂S | 13523-37-1 1,000 ppm | 25 |
| | | |
| d H₂O spiked with H₂S | Blank | 600 |
| d H₂O spiked with H₂S | 13523-37-1 500 ppm | 125 |
| d H₂O spiked with H₂S | 123523-37-2 500 ppm | 125 |
| d H₂O spiked with H₂S | EC6734A 500 ppm | 150 |
| d H₂O spiked with H₂S | 13523-37-1 1,000 ppm | 25 |
| d H₂O spiked with H₂S | 123523-37-2 1,000 ppm | 175 |
| d H₂O spiked with H₂S | EC6734A 1,000 ppm | 75 |

## Claims

1. A method for slick water fracturing or high-viscosity fracturing, which method comprises directing a composition into a subterranean environment, wherein the composition comprises:
1) a C₁ - C₂₂ carboxylic acid;
2) a C₁ - C₂₂ percarboxylic acid;
3) hydrogen peroxide;
4) a first stabilizing agent which is picolinic acid or a compound having the following Formula (IA): 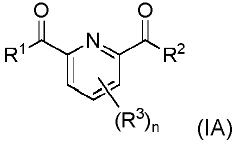 wherein
R¹ is OH or -NR^{1a}R^{1b}, wherein R^{1a} and R^{1b} are independently hydrogen or (C₁ -C₆) alkyl;
R² is OH or -NR^{2a}R^{2b}, wherein R^{2a} and R^{2b} are independently hydrogen or (C₁ -C₆) alkyl;
each R³ is independently (C₁ -C₆) alkyl, (C₂ -C₆) alkenyl or (C₂ -C₆) alkynyl; and
n is a number from zero to 3;
or a salt thereof;
or a compound having the following Formula (IB): 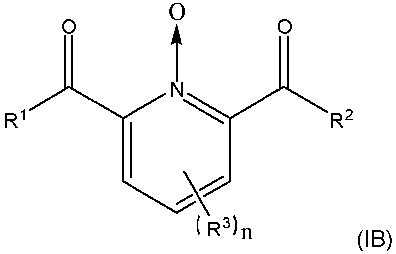
wherein
R¹ is OH or -NR^{1a}R^{1b}, wherein R^{1a} and R^{1b} are independently hydrogen or (C₁ -C₆) alkyl;
R² is OH or -NR^{2a}R^{2b}, wherein R^{2a} and R^{2b} are independently hydrogen or (C₁ -C₆) alkyl;
each R³ is independently (C₁ -C₆) alkyl, (C₂ -C₆) alkenyl or (C₂ -C₆) alkynyl; and
n is a number from zero to 3;
or a salt thereof;
5) a second stabilizing agent, which is a compound having the following Formula (IIA): 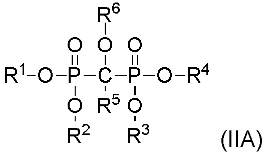 wherein
R¹, R², R³, and R⁴ are independently hydrogen, (C₁ -C₆) alkyl, (C₂ -C₆) alkenyl (C₂ -C₆) alkynyl or (C₆- C₂₀) aryl;
R⁵ is (C₁ -C₆) alkyl, (C₂ -C₆) alkenyl or (C₂ -C₆) alkynyl; and
R⁶ is hydrogen, (C₁ -C₆) alkyl, (C₂ -C₆) alkenyl or (C₂ -C₆)alkynyl;
or a salt thereof;
or a compound having the following Formula (IIB): 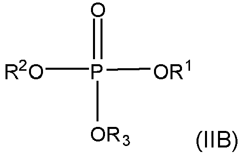
wherein
R¹, R², and R³ are independently hydrogen, (C₁ -C₆) alkyl, (C₂ -C₆) alkenyl, (C₂ -C₆) alkynyl, or (C₆ - C₂₀) aryl;
or a salt thereof;
6) either a friction reducer or a viscosity enhancer,
wherein for slick water fracturing, said hydrogen peroxide has a concentration of 1 ppm to 20 ppm, and said C₁ - C₂₂ percarboxylic acid has a concentration of at least 2 times of the concentration of said hydrogen peroxide, or
wherein for high-viscosity fracturing said hydrogen peroxide has a concentration of 1 ppm to 15 ppm, and said C₁-C₂₂ percarboxylic acid has a concentration of at least 2 times of the concentration of said hydrogen peroxide.

2. The method of claim 1, wherein for slick water fracturing, the composition is directed into a subterranean environment at a speed faster than 79 L/min (30 barrels (bbl)/min).

3. The method of claim 2, wherein for slick water fracturing, the composition is directed into a subterranean environment at a speed from 132 L/min to 265 L/min (50 bbl/min to 100 bbl/min).

4. The method of any of claims 1 to 3, wherein for slick water fracturing, the subterranean environment comprises a well in a shale gas and/or oil reservoir.

5. The method of any one of claims 1 to 4, wherein for slick water fracturing, the composition is pumped down a well-bore.

6. The method of any one of claims 1 to 5, wherein for slick water fracturing, the friction reducer is a polyacrylamide polymer and/or copolymer or an acrylamide-derived polymer and/or copolymer.

7. The method of any one of claims 1 to 6, wherein for slick water fracturing, the friction reducer has a concentration from 50 ppm to 5,000 ppm.

8. The method of claim 1, wherein for high-viscosity fracturing, the subterranean environment comprises a well in a gas and/or oil reservoir.

9. The method of claim 1, wherein for high-viscosity fracturing, the viscosity enhancer is a conventional linear gel, a borate-crosslinked gel, an organometallic-crosslinked gel or an aluminium phosphate-ester oil gel.

10. The method of any of claims 8 - 9, wherein for high-viscosity fracturing the viscosity enhancer has a concentration from 0.2 to 12 kg/m³ (2 to 100 units of pounds per thousand gallons).

11. The method of any one of claims 1 to 10, wherein the composition further comprises a proppant, a surfactant, a scale inhibitor and/or a breaker.

12. The method of claim 11, wherein the proppant is a sand or a ceramic bead.

13. The method of claim 11, wherein the scale inhibitor is a polymer, a phosphonate or a phosphate ester.

14. The method of claim 11, wherein the breaker is an oxidizer, an enzyme or a pH modifier.

## Patentansprüche

1. Verfahren zum Schlickwasser-Fracking oder Hochviskositäts-Fracking, wobei das Verfahren ein Leiten einer Zusammensetzung in eine unterirdische Umgebung umfasst, wobei die Zusammensetzung umfasst:
1) eine C₁-C₂₂-Carbonsäure;
2) eine C₁-C₂₂-Percarbonsäure;
3) Wasserstoffperoxid;
4) ein erstes Stabilisierungsmittel, das Picolinsäure oder eine Verbindung ist, die die folgende Formel (IA) aufweist: 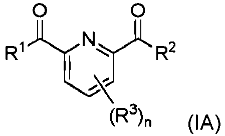 wobei
R¹ OH oder -NR^{1a}R^{1b} ist, wobei R^{1a} und R^{1b} unabhängig Wasserstoff oder (C₁-C₆)-Alkyl sind;
R² OH oder -NR^{2a}R^{2b} ist, wobei R^{2a} und R^{2b} unabhängig Wasserstoff oder (C₁-C₆)-Alkyl sind;
jedes R³ unabhängig (C₁-C₆)-Alkyl, (C₂-C₆)-Alkenyl oder (C₂-C₆)-Alkinyl ist; und
n eine Zahl von Null bis 3 ist;
oder ein Salz davon;
oder eine Verbindung, die die folgende Formel (IB) aufweist: 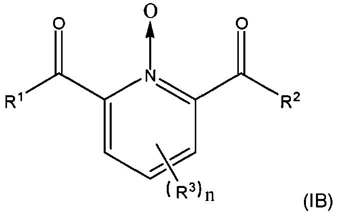
wobei
R¹ OH oder -NR^{1a}R^{1b} ist, wobei R^{1a} und R^{1b} unabhängig Wasserstoff oder (C₁-C₆)-Alkyl sind;
R² OH oder -NR^{2a}R^{2b} ist, wobei R^{2a} und R^{2b} unabhängig Wasserstoff oder (C₁-C₆)-Alkyl sind;
jedes R³ unabhängig (C₁-C₆)-Alkyl, (C₂-C₆)-Alkenyl oder (C₂-C₆)-Alkinyl ist; und
n eine Zahl von Null bis 3 ist;
oder ein Salz davon;
5) ein zweites Stabilisierungsmittel, das eine Verbindung ist, die die folgende Formel (IIA) aufweist: 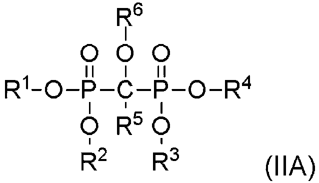 wobei
R¹, R², R³ und R⁴ unabhängig Wasserstoff, (C₁-C₆)-Alkyl, (C₂-C₆)-Alkenyl oder (C₂-C₆)-Alkinyl oder (C₆-C₂₀₎-Aryl sind;
R⁵ (C₁-C₆)-Alkyl, (C₂-C₆)-Alkenyl oder (C₂-C₆)-Alkinyl ist; und
R⁶ Wasserstoff, (C₁-C₆)-Alkyl, (C₂-C₆)-Alkenyl oder (C₂-C₆)-Alkinyl ist;
oder ein Salz davon;
oder eine Verbindung, die die folgende Formel (IIB) aufweist: 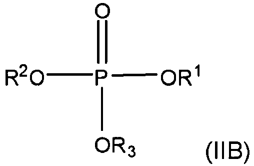
wobei
R¹, R² und R³ unabhängig Wasserstoff, (C₁-C₆)-Alkyl, (C₂-C₆)-Alkenyl oder (C₂-C₆)-Alkinyl oder (C₆-C₂₀)-Aryl sind;
oder ein Salz davon;
6) entweder ein Reibungsminderer oder ein Viskositätsverstärker,
wobei für das Schlickwasser-Fracking, das Wasserstoffperoxid eine Konzentration von 1 ppm bis 20 ppm aufweist und die C₁-C₂₂-Percarbonsäure eine Konzentration aufweist, die mindestens das Zweifache der Konzentration des Wasserstoffperoxids beträgt, oder
wobei für das Hochviskositäts-Fracking, das Wasserstoffperoxid eine Konzentration von 1 ppm bis 15 ppm aufweist und die C₁-C₂₂-Percarbonsäure eine Konzentration aufweist, die mindestens das Zweifache der Konzentration des Wasserstoffperoxids beträgt.

2. Verfahren nach Anspruch 1, wobei für das Schlickwasser-Fracking, die Zusammensetzung mit einer Geschwindigkeit von mehr als 79 l/min (30 Barrel (bbl)/min) in eine unterirdische Umgebung geleitet wird.

3. Verfahren nach Anspruch 2, wobei für das Schlickwasser-Fracking, die Zusammensetzung mit einer Geschwindigkeit von 132 l/min bis 265 l/min (50 bbl/min bis 100 bbl/min) in eine unterirdische Umgebung geleitet wird.

4. Verfahren nach einem der Ansprüche 1 bis 3, wobei für das Schlickwasser-Fracking, die unterirdische Umgebung eine Bohrung in einem Schiefergas- und/oder -ölreservoir umfasst.

5. Verfahren nach einem der Ansprüche 1 bis 4, wobei für das Schlickwasser-Fracking, die Zusammensetzung in ein Bohrloch gepumpt wird.

6. Verfahren nach einem der Ansprüche 1 bis 5, wobei für das Schlickwasser-Fracking, der Reibungsminderer ein Polyacrylamidpolymer und/oder -Copolymer oder ein von Acrylamid abgeleitetes Polymer und/oder Copolymer ist.

7. Verfahren nach einem der Ansprüche 1 bis 6, wobei für das Schlickwasser-Fracking, der Reibungsminderer eine Konzentration von 50 ppm bis 5.000 ppm aufweist.

8. Verfahren nach Anspruch 1, wobei für das Hochviskositäts-Fracking, die unterirdische Umgebung eine Bohrung in einem Gas- und/oder Ölreservoir umfasst.

9. Verfahren nach Anspruch 1, wobei für das Hochviskositäts-Fracking, der Viskositätsverstärker ein herkömmliches lineares Gel, ein boratvernetztes Gel, ein organometallisch vernetztes Gel oder ein Aluminiumphosphatester-Ölgel ist.

10. Verfahren nach einem der Ansprüche 8 bis 9, wobei für das Hochviskositäts-Fracking, der Viskositätsverstärker eine Konzentration von 0,2 bis 12 kg/m³ (2 bis 100 Pfund pro tausend Gallonen) aufweist.

11. Verfahren nach einem der Ansprüche 1 bis 10, wobei die Zusammensetzung ferner ein Stützmittel, ein Tensid, ein Kesselsteinverhütungsmittel und/oder einen Brecher umfasst.

12. Verfahren nach Anspruch 11, wobei das Stützmittel ein Sand oder keramischer Abstandhalter ist.

13. Verfahren nach Anspruch 11, wobei das Kesselsteinverhütungsmittel ein Polymer, ein Phosphonat oder ein Phosphatester ist.

14. Verfahren nach Anspruch 11, wobei der Brecher ein Oxidationsmittel, ein Enzym oder ein pH-Wert-Modifikator ist.

## Revendications

1. Procédé de fracturation par eau de nappe ou de fracturation à haute viscosité, lequel procédé comprend la direction d'une composition dans un environnement souterrain, dans lequel la composition comprend :
1) un acide carboxylique en C₁ à C₂₂ ;
2) un acide percarboxylique en C₁ à C₂₂ ;
3) du peroxyde d'hydrogène ;
4) un premier agent de stabilisation, qui est l'acide picolinique ou un composé ayant la formule (IA) suivante : 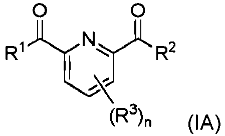 dans lequel
R¹ représente OH ou -NR^{1a}R^{1b}, dans lequel R^{1a} et R^{1b} représentent indépendamment l'hydrogène ou un alkyle en (C₁ à C₆) ;
R² représente OH ou -NR^{2a}R^{2b}, dans lequel R^{2a} et R^{2b} représentent indépendamment l'hydrogène ou un alkyle en (C₁ à C₆) ;
chaque R³ est indépendamment un alkyle en (C₁ à C₆), un alcényle en (C₂ à C₆) ou un alcynyle en (C₂ à C₆) ; et
n est un nombre de zéro à 3 ;
ou un sel de celui-ci ;
ou un composé ayant la formule (IB) suivante : 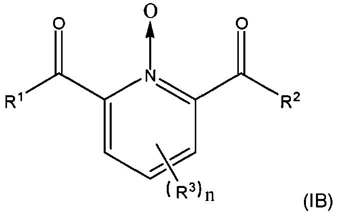
dans lequel
R¹ représente OH ou -NR^{1a}R^{1b}, dans lequel R^{1a} et R^{1b} représentent indépendamment l'hydrogène ou un alkyle en (C₁ à C₆) ;
R² représente OH ou -NR^{2a}R^{2b}, dans lequel R^{2a} et R^{2b} représentent indépendamment l'hydrogène ou un alkyle en (C₁ à C₆) ;
chaque R³ est indépendamment un alkyle en (C₁ à C₆), un alcényle en (C₂ à C₆) ou un alcynyle en (C₂ à C₆) ; et
n est un nombre de zéro à 3 ;
ou un sel de celui-ci ;
5) un second agent de stabilisation, qui est un composé ayant la formule (IIA) suivante : 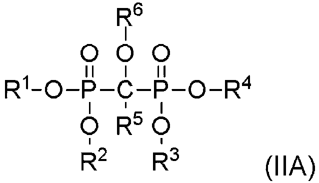 dans lequel
R¹, R², R³ et R⁴ représentent indépendamment l'hydrogène, un alkyle en (C₁ à C₆), un alcényle en (C₂ à C₆) ou un alcynyle en (C₂ à C₆), ou un aryle en (C₆ à C₂₀) ;
R⁵ représente un alkyle en (C₁ à C₆), un alcényle en (C₂ à C₆) ou un alcynyle en (C₂ à C₆) ; et
R⁶ représente l'hydrogène, un alkyle en (C₁ à C₆), un alcényle en (C₂ à C₆) ou un alcynyle en (C₂ à C₆) ;
ou un sel de celui-ci ;
ou un composé ayant la formule (IIB) suivante : 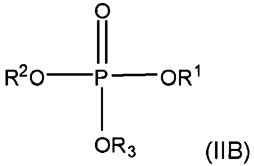
dans lequel
R¹, R² et R³ représentent indépendamment l'hydrogène, un alkyle en (C₁ à C₆), un alcényle en (C₂ à C₆) ou un alcynyle en (C₂ à C₆), ou un aryle en (C₆ à C₂₀) ;
ou un sel de celui-ci ;
6) soit un réducteur de friction ou un améliorateur de viscosité,
dans lequel, pour la fracturation par l'eau de nappe, ledit peroxyde d'hydrogène a une concentration de 1 ppm à 20 ppm, et ledit acide percarboxylique en C₁ à C₂₂ a une concentration d'au moins 2 fois la concentration dudit peroxyde d'hydrogène, ou
dans lequel, pour la fracturation à haute viscosité, ledit peroxyde d'hydrogène a une concentration de 1 ppm à 15 ppm, et ledit acide percarboxylique en C₁ à C₂₂ a une concentration d'au moins 2 fois la concentration dudit peroxyde d'hydrogène.

2. Procédé selon la revendication 1, dans lequel, pour la fracturation par eau de nappe, la composition est dirigée dans un environnement souterrain à une vitesse supérieure à 79 L/min
(30 barils/min).

3. Procédé selon la revendication 2, dans lequel, pour la fracturation par eau de nappe, la composition est dirigée dans un environnement souterrain à une vitesse comprise entre 132 L/min et 265 L/min (50 bbl/min et 100 bbl/min).

4. Procédé selon l'une quelconque des revendications 1 à 3, dans lequel, pour la fracturation par eau de nappe, l'environnement souterrain comprend un puits dans un réservoir de gaz et/ou d'huile de schiste.

5. Procédé selon l'une quelconque des revendications 1 à 4, dans lequel la composition est pompée dans un puits de forage pour la fracturation par l'eau de nappe.

6. Procédé selon l'une quelconque des revendications 1 à 5, dans lequel, pour la fracturation par eau de nappe, le réducteur de friction est un polymère et/ou un copolymère de polyacrylamide ou un polymère et/ou un copolymère dérivé de l'acrylamide.

7. Procédé selon l'une quelconque des revendications 1 à 6, dans lequel, pour la fracturation par eau de nappe, le réducteur de friction a une concentration comprise entre 50 ppm et 5 000 ppm.

8. Procédé selon la revendication 1, dans lequel, pour la fracturation à haute viscosité, l'environnement souterrain comprend un puits dans un réservoir de gaz et/ou de pétrole.

9. Procédé selon la revendication 1, dans lequel, pour la fracturation à haute viscosité, l'améliorateur de viscosité est un gel linéaire conventionnel, un gel réticulé au borate, un gel réticulé organométallique ou un gel d'huile à base d'ester de phosphate d'aluminium.

10. Procédé selon l'une quelconque des revendications 8 à 9, dans lequel, pour la fracturation à haute viscosité, l'améliorateur de viscosité a une concentration de 0,2 à 12 kg/m³ (2 à 100 unités de livres par millier de gallons).

11. Procédé selon l'une quelconque des revendications 1 à 10, dans lequel la composition comprend en outre un proppant, un surfactant, un inhibiteur de tartre et/ou un briseur.

12. Procédé selon la revendication 11, dans lequel l'agent de soutènement est un sable ou une perle en céramique.

13. Procédé selon la revendication 11, dans lequel l'inhibiteur de tartre est un polymère, un phosphonate ou un ester de phosphate.

14. Procédé selon la revendication 11, dans lequel le briseur est un oxydant, une enzyme ou un modificateur de pH.
